# EUROPÄISCHE PATENTANMELDUNG

(11) **EP 1 887 022 A1**
(43) Veröffentlichungstag der Anmeldung: **13.02.2008**
(21) Anmeldenummer: 06118761.3
(22) Anmeldetag: 10.08.2006
(51) Int. Cl.: C08G 59/56, C23C 22/00

(54) **Formkörper mit metallischer Oberfläche und einer darauf aufgebrachten Vorbehandlungsschicht umfassend ein Phosphinsäurederivat**

(71) Anmelder: BASF AKTIENGESELLSCHAFT, 67056 Ludwigshafen (DE)
(72) Erfinder: Fernandez Gonzalez, Monica, 67227 Frankenthal (DE); Hickl, Markus, 48145 Münster (DE); Göthlich, Alexander, 68163 Mannheim (DE); Vandermeulen, Guido, 68549 Ilveshaim (DE); Biehler, Manfred, 76831 Ilbesheim (DE); Bergmann, Hermann, 06-70 Caribbean Singapore 098652 (SG); Roschman, Konrad, 67069 Ludwigshafen-Edigheim (DE); Menzel, Klaus, 67069 Ludwigshafen (DE)
(74) Vertreter: Huhn, Michael

(57) **Zusammenfassung**

Die Erfindung betrifft einen Formkörper mit metallischer Oberfläche und einer darauf aufgebrachten Vorbehandlungsschicht, erhältlich durch ein Verfahren umfassend die folgenden Schritte: (1) Bereitstellen eines Substrates mit metallischer Oberfläche, (2) Aufbringen einer vernetzbaren Zubereitung auf die metallische Oberfläche des Substrates, wobei die Zubereitung bezogen auf die Summe aller Komponenten mit Ausnahme des Lösemittels umfasst: (A) 20 bis 70 Gew.-% mindestens eines thermisch und/oder photochemisch und/oder atmosphärisch vernetzbaren Bindemittelsystems, (B) 20 bis 70 Gew.-% mindestens einer Komponente, ausgewählt aus der Gruppe von anorganischen Füllstoffen, Pigmenten und Farbstoffen, (C) 0,25 bis 40 Gew.-% mindestens eines Phosphinsäurederivates der allgemeinen Formel HO₂P(R¹)(R²), in dem R¹ und R² gleich oder verschieden sind, und in dem R¹ eine substituierte oder nicht substituierte Phenylgruppe (-C₆H₅) oder eine substituierte oder nicht substituierte gesättigte oder ungesättigte aliphatische Gruppe mit 1 bis 30 C-Atomen ist, und R² eine substituierte oder nicht substituierte, gesättigte oder ungesättigte aliphatische Gruppe mit 1 bis 30 C-Atomen oder eine substituierte oder nicht substituierte aromatische Gruppe oder eine substituierte oder nicht substituierte araliphatische Gruppe ist, wobei sämtliche der genannten Gruppen gegebenenfalls ein oder mehrere Heteroatome aus der Gruppe umfassend Stickstoff, Sauerstoff, Schwefel, Phosphor in ihrer Kette umfassen und falls ein Substituent vorhanden ist, dieser ausgewählt ist aus der Gruppe -OH; -OR³; -SR⁴; -NR⁵₂; -NH(CO)R⁶, -(C=O)OR⁷; -(C=O)R⁸; -(C=NR⁹)R¹⁰; - (C=S)NR¹¹₂; -CN; -(C=S)R¹²; -(C=O)SR¹³; -(C=N)R¹⁴; -(C=O)NR¹⁵R¹⁶, oder eine weitere Phosphinsäuregruppe mit dem Strukturelement -P(O)(OH)-, wobei R³, R⁴, R⁵, R⁶, R⁷, R⁸, R⁹, R¹⁰, R¹¹, R¹²_{'} R¹³, R¹⁴, R¹⁵ und R¹⁶ unabhängig voneinander gleich oder verschieden sind und H, substituiertes oder nicht substituiertes C₁- bis C₆-Alkyl, oder substituiertes oder nicht substituiertes Aryl darstellen, wobei R²³ unabhängig die gleiche Bedeutung wie R¹ oder R² hat, und/oder ein Salz davon, (D) optional ein oder mehrere Lösemittel, sowie (3) thermisches und/oder photochemisches und/oder atmosphärisches Vernetzen der vernetzbaren Zubereitung. Die Erfindung betrifft weiterhin eine vernetzbare Zubereitung zum Aufbringen integrierter Vorbehandlungsschichten, sowie ein Verfahren zum Aufbringen derselbigen.

## Beschreibung

Die vorliegende Erfindung betrifft einen Formkörper mit metallischer Oberfläche und einer darauf aufgebrachten Vorbehandlungsschicht, ein Verfahren zum Aufbringen thermisch und/oder photochemisch und/oder atmosphärisch vernetzbarer Vorbehandlungsschichten auf metallischen Oberflächen, insbesondere auf die Oberflächen von Bandmetallen durch Behandeln mit einer Zusammensetzung, umfassend mindestens ein Bindemittel, einen organischen Füllstoff sowie ein Phosphinsäurederivat als Korrosionsschutzmittel.

Bei der Herstellung von metallischen Werkstücken wie beispielsweise Automobilteilen, Karosserieteilen, Geräteverkleidungen, Fassadenverkleidungen, Deckenverkleidungen oder Fensterprofilen werden Metallbleche mit Hilfe von Techniken wie Stanzen, Bohren, Falzen, Profilieren und/oder Tiefziehen geformt. Größere Bauteile, wie beispielsweise Automobilkarosserien werden gegebenenfalls durch Verschweißen mehrerer Einzelteile zusammengefügt. Das Rohmaterial hierzu sind üblicherweise lange Metallbänder, die durch Walzen des Metalls hergestellt und zum Lagern und Transportieren zu Rollen, so genannten "Coils", aufgewickelt werden.

Aufgrund ihrer Anfälligkeit gegenüber Korrosion müssen sowohl die vorstehend genannten metallischen Bauteile als und auch die Coils im Regelfalle dagegen geschützt werden. Insbesondere im Automobilbereich sind die Anforderungen an den Korrosionsschutz der metallischen Bauteile in den letzten Jahren sehr gestiegen. So werden bei neueren Autotypen heutzutage sogar bis zu 30 Jahre Garantie gegen Durchrostung gewährt.

Während die Korrosionsschutzbehandlung in der Vergangenheit im Wesentlichen am fertigen metallischen Werkstück, beispielsweise einer komplett zusammengeschweißten Automobilkarosserie vorgenommen wurde, wird in neuerer Zeit die Korrosionsschutzbehandlung in zunehmendem Maße bereits am Bandmetall selbst mittels des so genannten "Coil-Coatings" vorgenommen.

Unter "Coil-Coating" versteht man das kontinuierliche Beschichten von Metallbändern mit meist flüssigen Beschichtungsstoffen. Hierbei werden Metallbänder, die üblicherweise 0,2 bis 2 mm dick und typischerweise bis zu 2 m breit sind, beispielsweise mit einer Geschwindigkeit von bis zu 200 m/min durch eine Coil-Coating-Anlage geführt und dabei beschichtet. Als Metallbänder können hierbei beispielsweise kaltgewalzte Bänder aus weichen Stählen oder Baustählen, elektrolytisch verzinktes Feinblech, feuerverzinktes Stahlband oder Bänder aus Aluminium beziehungsweise Aluminiumlegierungen beschichtet werden. Die zur Beschichtung typischerweise verwendeten Anlagen umfassen eine Aufgabestation, einen Bandspeicher, eine Reinigungs- und Vorbehandlungszone, eine erste Lackierstation nebst Einbrennofen und kühlender Kühlzone, eine zweite Lackierstation mit Ofen, Kaschierstation und Kühlung sowie einen Bandspeicher und Aufwickler.

Üblichweise wird das Coil-Coating-Verfahren mit den nachfolgenden Verfahrensschritten durchgeführt:
1. Reinigung (optional) des Metallbandes von Verschmutzungen, die sich während der Lagerung angelagert haben, sowie von temporären Korrosionsschutzölen mit Hilfe von Reinigungsbändern;
2. Auftragen einer dünnen Vorbehandlungsschicht mit einer typischen Dicke von kleiner 1 µm im Tauch- oder Spritzverfahren oder im Rollenauftrag. Diese Schicht soll die Korrosionsbeständigkeit steigern und dient der Verbesserung der Haftung nachfolgend aufgetragener Lackschichten an der Metalloberfläche. Hierzu werden bevorzugt Cr(VI)-haltige, Cr(III)-haltige sowie auch chromatfreie Vorbehandlungsbäder verwendet;
3. Aufbringen einer Grundierung ("Primer") im Rollenauftragsverfahren. Die Trockenschichtdicke der Grundierung liegt üblicherweise zwischen 5 und 8 µm. Bei dem Aufbringen der Grundierung werden bevorzugt lösungsmittelbasierte Lacksysteme eingesetzt;
4. Aufbringen einer oder mehrerer Deckschichten ("Topcoats") im Rollenauftragsverfahren. Die typische Trockenschichtdicke der Deckschicht beziehungsweise Deckschichten liegt bei etwa 15 bis 25 µm. Hier werden ebenfalls in der Regel lösungsmittelbasierte Lacksysteme eingesetzt.

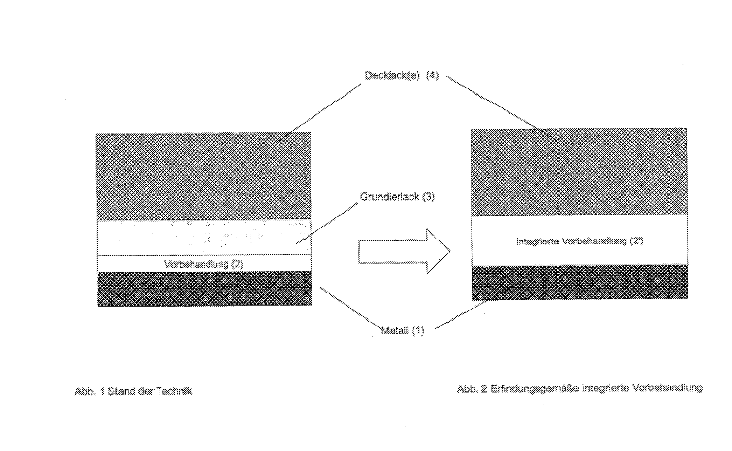

Der Schichtaufbau eines in dieser Weise beschichteten Metallbandes, beispielsweise eines beschichteten Stahlbandes, ist schematisch in Abbildung 1 dargestellt. Auf das Metall sind eine konventionelle dünne Vorbehandlungsschicht, eine Grundierung sowie eine oder mehrere verschiedene Decklackschichten aufgebracht.

Die vorstehend beschriebenen beschichteten Metallbänder werden beispielsweise im Automobilbau, zur Herstellung von Gehäusen für so genannte weiße Ware (Kühlschränke etc.) oder als Fassadenplatten für Gebäude eingesetzt.

Das Verfahren zur Beschichtung der Metallbänder mit der Vorbehandlungsschicht und einer Grundierung ist sehr aufwendig. Darüber hinaus steigt heutzutage zunehmend die Nachfrage nach Cr(VI)-freien Systemen zum Korrosionsschutz. Es hat daher nicht an Versuchen gefehlt, anstelle des separaten Auftragens einer Vorbehandlungsschicht und der Grundierung eine einzige Schicht aufzubringen, die die Funktion beider Schichten übernimmt. Ein derartiger Schichtaufbau ist schematisch in Abbildung 2 dargestellt.

Bei immobilen metallischen Konstruktionen wie beispielsweise Gebäuden, Brücken, Strommasten, Öltanks, Pipelines, Kraftwerken oder chemischen Anlagen können die Korrosionsschutzbeschichtungen naturgemäß nicht wie beschrieben mit Hilfe des Coil-Coating-Verfahrens aufgebracht werden, sondern werden üblicherweise an Ort und Stelle aufgestrichen oder aufgespritzt. Die Trocknung und Härtung derartiger Korrosionsschutzbeschichtungen erfolgt unter atmosphärischen Bedingungen also bei Umgebungstemperatur sowie in Gegenwart von Luft und vorherrschender Luftfeuchtigkeit.

Der erforderliche Korrosionsschutz von Oberflächen richtet sich nach der örtlich herrschenden Korrosionsbelastung. Je nach dem erforderlichen Schutzgrad wird der Korrosionsschutz von Oberflächen durch Korrosionsschutzanstriche auch als leichter, mittlerer und schwerer Korrosionsschutz bezeichnet. Schwerer Korrosionsschutz muss auch bei starken Korrosionsbelastungen, wie z.B. Industrieatmosphäre, feuchter und/oder salzhaltiger Atmosphäre, ausreichenden Schutz bieten.

Bei schweren Korrosionsbelastungen ist es daher üblich, eine Grund-, eine Zwischen- und eine Deckbeschichtung auf die metallische Oberfläche aufzubringen. Die Grundbeschichtung umfasst Korrosionsschutzmittel und/oder Korrosionsschutzpigmente und trägt somit entscheidend zur Korrosionsschutzfunktion bei. Sie sorgt weiterhin für eine ausreichende Haftung zwischen der metallischen Oberfläche und den nachfolgenden Beschichtungen. Die Zwischenbeschichtung wirkt vor allem als Barriereschicht. Sie kann zu diesem Zwecke beispielsweise blättchenförmige Pigmente umfassen. Die Deckbeschichtung soll voll allem den Anstrichaufbau vor Umwelteinflüssen wie Regen, Feuchtigkeit, UV-Licht, Luftverunreinigungen, Chemikalien, Staub oder Vogelkot schützen, und sie dient natürlich dekorativen Zwecken. Typische empfohlene Schichtdicken von Korrosionsschutzanstrichen liegen je nach Art des Anstriches zwischen 15 und 500 µm.

Das Aufbringen von drei Schichten bringt bei jeder notwendigen Erneuerung eines Korrosionsschutzanstriches nicht nur erheblichen Aufwand für das Entfernen des Altanstriches und das Auftragen des neuen Anstriches mit sich, sondern kann zusätzlich zur Folge haben, dass Anlagen oder Gebäude während der Sanierung über einen längeren Zeitraum hinweg nicht genutzt werden können.

DE 2 137 052 offenbart ein Verfahren zur Modifizierung von Aluminium-Oberflächen mittels eines fest gebundenen Films einer organischen Verbindung, die wenigstens 8 Kohlenstoffatome enthält und eine mit einem Alkohol reaktionsfähige funktionelle Gruppe aufweist. Das in dieser Druckschrift offenbarte Verfahren ist dadurch gekennzeichnet, dass eine aktive, hydratisierte, amorphe Schicht von Aluminiumoxid, die mit der Aluminium-Oberfläche zu einem Ganzen vereinigt ist, gebildet wird. Diese Schicht von Aluminiumoxid wird mit einer organischen Verbindung beschichtet, die beispielsweise Phosphinsäurederivate enthalten kann.

WO 02/079105 A1 offenbart die Verwendung von Korrosionsinhibitoren, die auf Phosphinsäurederivaten basieren. Diese Druckschrift bezieht sich insbesondere auf die Verwendung derartiger Korrosionsinhibitoren in wässrigen Systemen, besonders in Kühlwasserkreisläufen und Ölfördereinrichtungen.

In der US 3,249,447 sind verbesserte Beschichtungszusammensetzungen zum Schutz von Metalloberflächen gegen Korrosion offenbart. Zum Zweck des Korrosionsschutzes wird auf die Metalloberflächen eine Schicht aufgetragen, die im Wesentlichen aus einer organischen Beschichtung wie einem Lack, einer Farbe und ähnlichem und einem Salz der Phosphinsäure besteht. Als Salz der Phosphinsäure werden in dieser Druckschrift Chrom-, Calcium- oder Bleisalz genannt.

US 3,634,146 beschreibt ein Verfahren zur Vorbehandlung von Metalloberflächen, mit dessen Hilfe einerseits die Anhaftung nachfolgend aufgetragener Beschichtungen verbessert und andererseits die Korrosion der Metalloberflächen verhindert werden soll. Diese Druckschrift offenbart insbesondere die Verwendung von Phosphinsäurederivaten als Korrosionsinhibitoren bei der Vorbehandlung von Metalloberflächen.

Die JP 2002194273 offenbart eine Pulverbeschichtungszusammensetzung zur Beschichtung von Aluminiumrädern. Diese Zusammensetzung umfasst zwischen 0,01 bis 8 Gew.-% eines Phosphinsäurederivates als Korrosionsinhibitor, ein Epoxygruppen enthaltendes Acrylharz und eine Polycarboxylsäure-Komponente.

Aufgabe der Erfindung ist es, ein verbessertes Verfahren zur Erzeugung von Korrosionsschutzschichten sowie verbesserte Korrosionsschutzschichten insbesondere auf Formkörpern bereitzustellen. Daher soll es möglich sein, auf den Einsatz von Schwermetallen, insbesondere auf den Einsatz von Chromverbindungen verzichten zu können.

Dementsprechend wird gemäß der vorliegenden Erfindung ein Formkörper mit metallischer Oberfläche und einer darauf aufgebrachten Vorbehandlungsschicht zur Verfügung gestellt, erhältlich durch ein Verfahren umfassend die folgenden Schritte:
(1) Bereitstellen eines Substrates mit metallischer Oberfläche,
(2) Aufbringen einer vernetzbaren Zubereitung auf die metallische Oberfläche des Substrates, wobei die Zubereitung bezogen auf die Summe aller Komponenten mit Ausnahme des Lösemittels umfasst:
   (A) 20 bis 70 Gew.-% mindestens eines thermisch und/oder photochemisch und/oder atmosphärisch vernetzbaren Bindemittelsystems,
   (B) 20 bis 70 Gew.-% mindestens einer Komponente ausgewählt aus der Gruppe von anorganischen Füllstoffen, Pigmenten und Farbstoffen,
   (C) 0,25 bis 40 Gew.-% mindestens eines Phosphinsäurederivates der allgemeinen Formel HO₂P(R¹)(R²), in der R¹ und R² gleich oder verschieden sind, und R¹ eine substituierte oder nicht substituierte Phenylgruppe (-C₆H₅) oder eine substituierte oder nicht substituierte gesättigte oder ungesättigte aliphatische Gruppe mit 1 bis 30 C-Atomen ist, und R² eine substituierte oder nicht substituierte, gesättigte oder ungesättigte aliphatische Gruppe mit 1 bis 30 C-Atomen, eine substituierte oder nicht substituierte aromatische Gruppe, oder eine substituierte oder nicht substituierte araliphatische Gruppe ist, wobei sämtliche der genannten Gruppen gegebenenfalls ein oder mehrere Heteroatome aus der Gruppe umfassend Stickstoff, Sauerstoff, Schwefel, Phosphor in ihrer Kette umfassen und, falls ein Substituent vorhanden ist, dieser ausgewählt ist aus der Gruppe -OH;-OR³; -SR⁴; -NR⁵₂; -NH(CO)R⁶, -(C=O)OR⁷; -(C=O)R⁸; -(C=NR⁹)R¹⁰;-(C=S)NR¹¹₂; -CN; -(C=S)R¹²; -(C=O)SR¹³; -(C=N)R¹⁴; -(C=O)NR¹⁵R¹⁶, und einer weiteren Phosphinsäuregruppe mit dem Strukturelement -P(O)(OH)-R²³ wobei R³, R⁴, R⁵, R⁶, R⁷, R⁸, R⁹, R¹⁰, R¹¹, R¹², R¹³, R¹⁴, R¹⁵ und R¹⁶ unabhängig voneinander gleich oder verschieden sind und H, substituiertes oder nicht substituiertes C₁- bis C₆-Alkyl, oder substituiertes oder nicht substituiertes Aryl darstellen, wobei R²³ unabhängig die gleiche Bedeutung wie R¹ oder R² hat, und/oder ein Salz davon,
   (D) optional ein oder mehrere Lösungsmittel sowie
(3) thermisches und/oder photochemisches und/oder atmosphärisches Vernetzen der aufgebrachten vernetzbaren Zubereitung.

Gemäß der vorliegenden Erfindung handelt es sich bei dem Phosphinsäurederivat um ein Phosphinsäurederivat der allgemeinen Formel HO₂P(R¹)(R²) in der R¹ und R² gleich oder verschieden sind, und R¹ eine substituierte oder nicht substituierte Phenylgruppe (-C₆H₅) oder eine substituierte oder nicht substituierte gesättigte oder ungesättigte aliphatische Gruppe mit 1 bis 30 C-Atomen ist, und R² eine substituierte oder nicht substituierte, gesättigte oder ungesättigte aliphatische Gruppe mit 1 bis 30 C-Atomen oder eine substituierte oder nicht substituierte aromatische Gruppe oder eine substituierte oder nicht substituierte araliphatische Gruppe ist, wobei sämtliche der genannten Gruppen gegebenenfalls ein oder mehrere Heteroatome aus der Gruppe umfassend Stickstoff, Sauerstoff, Schwefel, Phosphor in ihrer Kette umfassen und, falls ein Substituent vorhanden ist, dieser ausgewählt ist aus der Gruppe -OH; -OR³, -SR⁴; - NR⁵₂; -NH(CO)R⁶, -(C=O)OR⁷; -(C=O)R⁸; -(C=NR⁹)R¹⁰; -(C=S)NR¹¹₂; -CN; -(C=S)R¹²; - (C=O)SR¹³; -(C=N)R¹⁴; -(C=O)NR¹⁵R¹⁶ und einer weiteren Phosphinsäuregruppe mit dem Strukturelement -P(O)(OH)-R²³ wobei R³, R⁴, R⁵, R⁶, R⁷, R⁸, R⁹, R¹⁰, R¹¹, R¹², R¹³, R¹⁴, R¹⁵ und R¹⁶ unabhängig voneinander gleich oder verschieden sind und H, substituiertes oder nicht substituiertes C₁- bis C₆-Alkyl, oder substituiertes oder nicht substituiertes Aryl darstellen, wobei R²³ unabhängig die gleiche Bedeutung wie R¹ oder R² hat, und/oder ein Salz davon.

Gemäß einer bevorzugten Ausführungsform der Erfindung handelt es sich bei dem Verfahren um ein kontinuierliches Verfahren zum Beschichten von Metallbändern.
Das erfindungsgemäß verwendete Phosphinsäurederivat entspricht der allgemeinen Formel HO₂P(R¹)(R²). Gemäß einer Ausführungsform der Erfindung sind R¹ und R² identisch, gemäß einer weiteren Ausführungsform sind R¹ und R² voneinander verschieden.

R¹ ist eine substituierte oder nicht substituierte Phenylgruppe (-C₆H₅) oder eine substituierte oder nicht substituierte gesättigte oder ungesättigte aliphatische Gruppe mit 1 bis 30 C-Atomen, bevorzugt mit 2 bis 20 C-Atomen, besonders bevorzugt mit 2 bis 12 C-Atomen.

Beispiele von Substituenten an der Phenylgruppe umfassen: substituiertes oder nicht substituiertes C₁- bis C₁₅-Alkyl; substituiertes oder nicht substituiertes C₂- bis C₁₅-Alkenyl; substituiertes oder nicht substituiertes C₂- bis C₁₅-Alkinyl; substituiertes oder nicht substituiertes C₁- bis C₁₅-Alkoxy, wobei die genannten Gruppen linear oder verzweigt, cyclisch oder nicht cyclisch sein können; -OH; -NO₂; -CN; -(C=O)OR¹⁷, wobei R¹⁷ ein Wasserstoffatom, eine aliphatische Verbindung mit 1 bis 6 C-Atomen oder eine Phenylgruppe (-C₆H₅) ist, und -NR^{18,18'}₂, wobei R¹⁸ und R^{18'} unabhängig voneinander H, eine substituierte oder nicht substituierte Phenylgruppe, eine C₁ bis C₁₅-Alkylgruppe, eine C₂- bis C₁₅-Alkenylgruppe, eine C₂- bis C₁₅-Alkinylgruppe darstellen, wobei sämtliche der Gruppen R¹⁷, R¹⁸ und R^{18'} linear oder verzweigt, cyclisch oder nicht cyclisch sein können. Im Falle von Alkenyl- oder Alkinylverbindungen können eine oder mehrere Doppel- beziehungsweise Dreifachbindungen vorliegen. Bevorzugte Alkylgruppen sind C₁- bis C₄-Alkylgruppen, dies sind die Gruppen Methyl, Ethyl, Propyl, Isopropyl, n-Butyl, sec.-Butyl, Isobutyl und tert.-Butyl. Bevorzugte Alkoxygruppen sind Methoxy- und Ethoxygruppen. Die Phenylgruppe kann einfach oder mehrfach substituiert sein.

Ist R¹ eine substituierte oder nicht substituierte gesättigte oder ungesättigte aliphatische Gruppe, so handelt es sich um eine C₁- bis C₃₀-Alkylgruppe, eine C₂- bis C₃₀-Alkenylgruppe; eine C₂- bis C₃₀- Alkinylgruppe, wobei sämtliche der genannten Gruppen linear oder verzweigt, cyclisch oder nicht cyclisch sein können. Im Falle von Alkenyl- oder Alkinylverbindungen können eine oder mehrere Doppel- beziehungsweise Dreifachbindungen vorliegen. Geeignete Substituenten dieser aliphatischen Gruppe sind ausgewählt aus der Gruppe -(C=O)OR¹⁹, -(C=S)NR²⁰, -(C=O)NHR²¹; wobei R¹⁹ und R²⁰ ein Wasserstoffatom, eine substituierte oder nicht substituierte aliphatische Verbindung mit 1 bis 12 C-Atomen oder eine Phenylgruppe (-C₆H₅) sind. Bevorzugt sind R¹⁹ und R²⁰ ein Wasserstoffatom oder eine Methylgruppe. R²¹ ist eine substituierte oder nicht substituierte lineare oder verzweigte, cyclische oder nicht cyclische aliphatische Gruppe mit 1 bis 12 C-Atomen oder eine Phenylgruppe (-C₆H₅). Bevorzugt ist R²¹ eine aliphatische Gruppe mit 6 bis 12 C-Atomen. R¹ kann gemäß der Erfindung einfach oder mehrfach substituiert sein.

Gemäß einer bevorzugten Ausführungsform der Erfindung ist R¹ eine nicht substituierte Phenylgruppe (-C₆H₅).

R² ist gemäß der vorliegenden Erfindung eine substituierte oder nicht substituierte C₁-bis C₃₀-Alkylgruppe; eine substituierte oder nicht substituierte C₂- bis C₃₀-Alkenylgruppe; eine substituierte oder nicht substituierte C₂- bis C₃₀- Alkinylgruppe, wobei sämtliche der genannten Gruppen linear oder verzweigt, cyclisch oder nicht cyclisch sein können, oder eine substituierte oder nicht substituierte aromatische und/oder araliphatische Gruppe (Arylalkyl-Kohlenwasserstoffgruppe oder Alkylaryl-Kohlenwasserstoffgruppe), wobei die genannten Gruppen gegebenenfalls ein oder mehrere Heteroatome in ihrer Kette und gegebenenfalls einen oder mehrere Substituenten umfassen. Im Falle von Alkenyl- oder Alkinylverbindungen können eine oder mehrere Doppel- beziehungsweise Dreifachbindungen vorliegen.

Für den Fall der atmosphärischen, thermischen oder photochemischen Vernetzung gibt es bevorzugte Ausführungsformen des Phosphinsäurederivates für die jeweilige Art der Vernetzung.

Für eine thermisch oder atmosphärisch vernetzbare Zubereitung ist als R² eine substituierte oder nicht substituierte, gesättigte oder ungesättigte aliphatische Gruppe mit 1 bis 8 C-Atomen bevorzugt, die gegebenenfalls einen oder mehrere der vorstehend für R² definierten Substituenten umfasst, vorzugsweise weist die aliphatische Gruppe 1 bis 4 C-Atome auf, am meisten bevorzugt 2 C-Atome, insbesondere wenn R¹ ein Phenylrest ist.

Für eine photochemisch vernetzbare Zubereitung ist als R² eine substituierte oder nicht substituierte, gesättigte oder ungesättigte aliphatische Gruppe mit 2 bis 20 C-Atomen oder nicht substituierte aromatische Gruppe bevorzugt, die gegebenenfalls einen oder mehrere der vorstehend für R² definierten Substituenten umfasst, vorzugsweise weist die aliphatische Gruppe 6 bis 18 C-Atome auf, am meisten bevorzugt 8 bis 16 C-Atome.

Gemäß einer Ausführungsform der Erfindung umfasst R² einen oder mehrere Substituenten. Der Fachmann trifft je nach Natur des Bindemittelsystems und der metallischen Oberfläche eine geeignete Auswahl an Substituenten. Bei den Substituenten handelt es sich vorzugsweise um einen oder mehrere ausgewählt aus der Gruppe - OH; -OR³; -SR⁴; -NR⁵₂; -NH(CO)R⁶, -(C=O)OR⁷; -(C=O)R⁸; -(C=NR⁹)R¹⁰; -(C=S)NR¹¹₂; -CN; -(C=S)R¹²; -(C=O)SR¹³; -(C=N)R¹⁴; -(C=O)NR¹⁵R¹⁶, wobei R³, R⁴, R⁵, R⁶, R⁷, R⁸, R⁹, R¹⁰, R¹¹, R¹², R¹³, R¹⁴, R¹⁵ und R¹⁶ unabhängig voneinander gleich oder verschieden sind und H, substituiertes oder nicht substituiertes C₁- bis C₆-Alkyl, oder substituiertes oder nicht substituiertes Aryl darstellen. Mehr bevorzugt ist R¹⁵ H und R¹⁶ C₆H₁₃, C₄H₈NH₂, C₆H₁₃NH₂ oder C₂H₄OH. Über die Substituenten kann beispielsweise eine Bindung zwischen dem Phosphinsäurederivat als organischem Korrosionsschutzmittel und dem vernetzbaren Bindemittelsystem entstehen, wodurch sowohl der Halt der erfindungemäßen Vorbehandlungsschicht auf der metallischen Oberfläche als auch der Zusammenhalt der integrierten Vorbehandlungsschicht verbessert wird.

Gemäß einer weiteren Ausführungsform umfasst R² eine (also eine weitere) oder mehrere weitere Phosphinsäuregruppen mit dem Strukturelement -P(O)(OH)-R²³, wobei R²³ unabhängig die gleiche Bedeutung wie R¹ oder R² hat und unabhängig davon ist (also die gleiche oder andere Bedeutung als R¹ und R² haben kann). Gemäß einer bevorzugten Ausführungsform der Erfindung ist damit die weitere Phosphinsäuregruppe mit der ersten Phosphinsäuregruppe verbunden über ein der nachfolgenden Strukturelemente (nachfolgend auch "Kohlenwasserstoffbrücke" genannt): eine substituierte oder nicht substituierte C₁- bis C₁₅-Alkylengruppe; eine substituierte oder nicht substituierte C₂- bis C₁₅-Alkenylengruppe oder eine substituierte oder nicht substituierte C₂- bis C₁₅- Alkinylengruppe. Im Falle von Alkenylen- oder Alkinylenverbindungen können eine oder mehrere Doppel- beziehungsweise Dreifachbindungen vorliegen. Bevorzugt umfassen die vorstehend genannten Ketten 2 bis 10 C-Atome, besonders bevorzugt 3 bis 6 C-Atome. Gemäß einer Ausführungsform umfasst die Kohlenwasserstoffbrücke in der Kette und/oder an anderer Stelle substituierte oder nicht substituierte aromatische Gruppen. Falls zumindest ein Substituent an der Kohlenwasserstoffbrücke vorhanden ist, ist dieser ausgewählt aus der Gruppe -OH, -NO₂, -CN, -(C=O)OR²¹, -NR^{22,22'}₂, wobei R²¹, R²² und R^{22'} gleich oder verschieden und unabhängig voneinander H, C₁- bis C₆-Alkyl oder Aryl sind. Besonders bevorzugte Substituenten sind die Gruppen -(C=O)OH und -(C=S)NH₂.

Ist eine weitere Phosphinsäuregruppe vorhanden, ist die mit der weiteren Phosphinsäuregruppe über eine Einheit verbunden, die mit der die erste und die weitere Phosphinsäuregruppe verbindenden Einheit identisch oder von dieser verschieden ist. Neben der zweiten Phosphinsäuregruppe können 1, 2, 3 oder mehr Phosphinsäuregruppen mit dem Strukturelement P(O)(OH)R²³ vorhanden sein.

Gemäß einer besonderen Ausführungsform der Erfindung ist an die weitere Phosphinsäuregruppe eine Gruppe gebunden, die mit R¹ identisch ist. Besonders bevorzugt ist an die weitere Phosphinsäuregruppe mit dem Strukturelement -P(O)(OH)-R²³ als R²³ eine nicht substituierte Phenylgruppe (-C₆H₅) gebunden.

Die Phosphinsäurederivate werden als freie Säure und/oder in Form der Salze eingesetzt. Beispiele geeigneter Salze umfassen Alkalimetallsalze, Ammoniumsalze oder Erdalkalisalze, insbesondere Li, Na, K oder NH₄⁺ Salze. Bei den Gegenionen kann es sich auch um organische Kationen handeln, beispielsweise um Ammoniumkationen der allgemeinen Formel NR'₄⁺, wobei die Gruppe R' unabhängig voneinander für H oder eine organische Gruppe, insbesondere eine geradkettigen oder verzweigte Alkylgruppe mit 1 bis 20, bevorzugt mit 1 bis 10 C-Atomen steht. Beispiele geeigneter Gruppen umfassen Methyl-, Ethyl-, n-Propyl oder n-Butyl-Gruppen.

Die Menge der Phosphinsäuren in der integrierten Vorbehandlungsschicht wird vom Fachmann je nach den gewünschten Eigenschaften der Schicht ausgewählt und beträgt üblicherweise 0,25 bis 40 Gew.-%, bevorzugt 0,5 bis 30 Gew.-%, besonders bevorzugt 0,7 bis 20 Gew.-% und am meisten bevorzugt 1,0 bis 10 Gew.-%, bezogen auf die Menge aller Komponenten der Formulierung mit Ausnahme des Lösungsmittels (D).

Unter dem Begriff "Vorbehandlungsschicht" ist im Sinne dieser Erfindung zu verstehen, dass die erfindungsgemäße Beschichtung auf eine Metalloberfläche direkt oder auf eine Metalloberfläche, die zumindest teilweise bereits beispielsweise mit einer Lackschicht oder einer Grundierung beschichtet ist, aufgebracht wird. Der Begriff "Metalloberfläche" im Sinne der Anmeldung umfasst sowohl eine absolut blanke Metalloberfläche als auch eine Oberfläche, die sich beim üblichen Umgang mit dem Metall in atmosphärischer Umgebung oder auch beim Reinigen des Metalls vor dem Aufbringen der integrierten Vorbehandlungsschicht unvermeidlicherweise ausbildet. Das eigentliche Metall kann beispielsweise noch einen Feuchtigkeitsfilm oder eine dünne Oxid- oder Oxidhydrathaut aufweisen.

Unter dem Begriff "integrierte Vorbehandlungsschicht" ist im Sinne dieser Erfindung zu verstehen, dass die erfindungsgemäße Beschichtung direkt auf die Metalloberfläche aufgebracht wird, ohne dass vorher eine korrosionshemmende Vorbehandlung wie Passivierung, Aufbringen einer Konversionsschicht oder Phosphatierung, insbesondere keine Behandlung mit Cr(VI)-Verbindungen vorgenommen wird. Die integrierte Vorbehandlungsschicht kombiniert die Passivierungsschicht mit der Grundierung sowie gegebenenfalls noch weitere Schichten in einer einzigen Schicht. Der Begriff "Metalloberfläche" im Sinne der Anmeldung umfasst sowohl eine absolut blanke Metalloberfläche als auch eine Oberfläche, die sich beim üblichen Umgang mit dem Metall in atmosphärischer Umgebung oder auch beim Reinigen des Metalls vor dem Aufbringen der integrierten Vorbehandlungsschicht unvermeidlicherweise ausbildet. Das eigentliche Metall kann beispielsweise noch einen Feuchtigkeitsfilm oder eine dünne Oxid- oder Oxidhydrathaut aufweisen.

Im Regelfalle empfiehlt es sich, die metallische Oberfläche für die Durchführung des erfindungsgemäßen Verfahrens in einem Verfahrensschritt (0) vorzubereiten, auch wenn dies nicht in jedem Fall absolut zwingend ist. Unter Oberflächenvorbereitung für die Durchführung von Korrosionsschutzmaßnahmen versteht der Fachmann die Reinigung der Oberfläche von allen Verunreinigungen sowie das Einstellen einer auf die Korrosionsschutzmaßnahme abgestimmten Oberflächenrauhigkeit. Beispiele für Reinigungsverfahren umfassen das Reinigen mit Wasser oder Lösemitteln, Beizen mit geeigneten Formulierungen oder Hochdruckreinigen. Beispiele weiterer Maßnahmen umfassen Schleifen und insbesondere Strahlen der Oberfläche, beispielsweise Sandstrahlen sowie weiterhin Flammstrahlen. Es können hierbei alle anhaftenden Schichten bis hinunter zum blanken Metall abgetragen werden. Es ist aber auch möglich, unter Anwendung weniger intensiver Methoden nur schlecht haftende Schichten abzutragen, während intakte Schichten auf der Oberfläche verbleiben. Eine mögliche Technik hierzu ist das so genannte Sweep-Strahlen.

Gemäß einer Ausführungsform des erfindungsgemäßen Verfahrens wird die atmosphärisch vernetzende integrierte Vorbehandlungsschicht mit einer Dicke von mindestens 15 µm auf die metallische Oberfläche aufgebracht.

Die integrierte Vorbehandlungsschicht kann dabei unmittelbar auf die blanke metallische Oberfläche aufgebracht werden oder aber auf eine bereits mit einer Korrosionsschutzschicht vorbeschichtete Oberfläche.

Zum Aufbringen können die üblichen, dem Fachmann bekannten Techniken eingesetzt werden. Bevorzugt wird die Zubereitung aufgestrichen oder aufgespritzt.

Nach dem Aufbringen auf die Oberfläche härtet die aufgebrachte Beschichtung in Verfahrensschritt (2) unter atmosphärischen Bedingungen aus. Dies kann im einfachsten Falle durch das allmähliche Verdampfen des Lösemittels erfolgen. Je nach der Natur des eingesetzten Bindemittels können noch andere Vernetzungsprozesse ablaufen. Einzelheiten hierzu wurden bereits oben dargestellt.

Je nach der Dicke der gewünschten Schicht, kann die gesamte Schicht in einem einzigen Arbeitsgang aufgebracht werden, oder aber es können auch mehrere gleichartige Schichten nacheinander aufgebracht und jeweils gehärtet werden, um die gewünschte Gesamtschichtdicke der integrierten Vorbehandlungsschicht zu erreichen.

Die Dicke der ausgehärteten, mindestens einen atmosphärisch vernetzbaren integrierten Vorbehandlungsschicht beträgt erfindungsgemäß mindestens 15 µm, bevorzugt mindestens 25 µm, besonders bevorzugt mindestens 40 µm, ganz besonders bevorzugt mindestens 60 µm und beispielsweise mindestens 100 µm. Sie wird vom Fachmann je nach den gewünschten Eigenschaften und dem Einsatzzweck der Schicht festgelegt.

Fertigungsbeschichtungen sind üblicherweise dünn, und liegen bevorzugt im Bereich von 15 bis 25 µm. Die Dicke von integrierten Vorbehandlungsschichten, bei denen es sich nicht um Fertigungsschichten handelt, beträgt in der Regel mindestens 25 µm, bevorzugt mindestens 40 µm, besonders bevorzugt mindestens 60 µm und ganz besonders bevorzugt mindestens 100 µm.

Die obere Grenze für die Gesamtschichtdicke, d.h. die Dicke aller aufgebrachten Schichten zusammen, beträgt 2 mm, bevorzugt weniger als 1,5 mm, besonders bevorzugt weniger als 1 mm, ganz besonders bevorzugt weniger als 800 µm und insbesondere weniger als 500 µm.

Gemäß der Erfindung wurde eine zum Aufbringen integrierter Vorbehandlungsschichten auf metallische Oberflächen eines Substrates mit Hilfe des erfindungsgemäßen Verfahrens geeignete vernetzbare Zubereitung gefunden.

Die vernetzbare Zubereitung zum Aufbringen integrierter Vorbehandlungsschichten auf metallische Oberflächen eines Substrates umfasst mindestens die folgenden Komponenten; bezogen auf die Summe aller Komponenten mit Ausnahme des Lösemittels:
(A) 20 bis 70 Gew.-% mindestens eines thermisch und/oder photochemisch und/oder atmosphärisch vernetzbaren Bindemittelsystems,
(B) 20 bis 70 Gew.-% mindestens einer Komponente ausgewählt aus der Gruppe von anorganischen Füllstoffen, Pigmenten und Farbstoffen,
(C) 0,25 bis 40 Gew.-% mindestens eines Phosphinsäurederivates, wie vorstehend definiert, sowie
(D) optional ein oder mehrere Lösemittel.

Mit Hilfe des erfindungsgemäßen Verfahrens lassen sich metallische Substrate, vorzugsweise metallische Oberflächen metallischer Substrate mit einer integrierten Vorbehandlungsschicht versehen. Die erfindungsgemäße integrierte thermisch oder photochemisch vernetzbare Vorbehandlungsschicht weist vorzugsweise eine Dicke von etwa 1 bis etwa 25 µm auf und wird je nach den gewünschten Eigenschaften und dem Einsatzzweck der Schicht festgelegt. Im Regelfall hat sich für integrierte Vorbehandlungsschichten, die thermisch oder photochemisch vernetzbar sind, eine Dicke von 3 bis 15 µm bewährt, die mehr bevorzugt ist. Besonders bevorzugt ist eine Dicke von 4 bis 10 µm und meist bevorzugt sind 5 bis 8 µm. Die Dicke ergibt sich aus der Menge der jeweils aufgebrachten Zusammensetzung. Bei dem Substrat kann es sich prinzipiell um die Oberflächen beliebig geformter metallischer Körper handeln. Es kann sich hierbei um vollständig aus Metallen bestehende Körper handeln, die Körper können aber auch mit Metallen beschichtet sein und selbst aus andersartigen Materialien bestehen, beispielsweise aus Polymeren oder Verbundwerkstoffen.

Besonders vorteilhaft kann es sich aber bei dem Substrat um flächenförmige Formkörper mit metallischer Oberfläche handeln, d.h. Formkörper, deren Dicke erheblich geringer ist als die Ausdehnung in den anderen Dimensionen. Beispiele umfassen Bleche, Folien, Platten und insbesondere Metallbänder sowie daraus - beispielsweise durch Trennen, Umformen und Fügen - gefertigte Bauteile mit metallischer Oberfläche, wie beispielsweise Automobilkarosserien oder Teile davon. Die Dicke beziehungsweise die Wandstärke derartiger metallischer Materialien beträgt weniger als 4 mm und bevorzugt weniger als 0,25 bis 2 mm.

Gemäß einer weiteren Ausführungsform der Erfindung wird die vernetzbare Zubereitung zur Korrosionsbehandlung von metallischen Bauwerken oder Metallkonstruktionen beziehungsweise den dazu benötigten Bauteilen verwendet. Metallkonstruktionen bzw. Bauwerke werden üblicherweise aus Baustahl, wie Stahlträgern, Stahlrohren oder Stahlblechen durch Nieten, Schweißen oder Schrauben zu entsprechenden Konstruktionen verbunden. Unter dem Begriff "Formkörper mit metallischer Oberfläche" sind daher im Rahmen der Erfindung ebenfalls Brücken, Strommasten, Tanks, Container, chemische Anlagen, Gebäude, Dächer, Rohre, Kupplungen, Flansche, Schiffe, Kräne, Pfähle oder Spundwände zu verstehen.

Mit Hilfe des erfindungsgemäßen Verfahrens können im Prinzip alle Arten von Metallen beschichtet werden. Bevorzugt handelt es sich aber um unedle Metalle oder Legierungen, welche üblicherweise als metallische Konstruktionswerkstoffe beispielsweise im Automobilbau eingesetzt werden und die vor Korrosion geschützt werden müssen.

Insbesondere handelt es sich um die Oberflächen von Eisen, Stahl, Zink, Zinklegierungen, Aluminium oder Aluminiumlegierungen. Stahl kann die Üblichen, dem Fachmann bekannten Legierungskomponenten enthalten. Es kann sich dabei um die Oberflächen von vollständig aus den besagten Metallen bzw. Legierungen bestehenden Körpern handeln. Es kann sich aber auch um die Oberflächen von mit Zn, Zn-Legierungen, Al oder Al-Legierungen beschichteten Körpern handeln, wobei die Körper aus anderen Materialien, beispielsweise aus anderen Metallen, Legierungen, Polymeren oder Verbundwerkstoffen bestehen kann.

Besonders bevorzugt wird das erfindungsgemäße Verfahren eingesetzt, um integrierte Vorbehandlungsschichten auf die Oberflächen von Eisen, Stahl, Zink, Zinklegierungen, Aluminium oder Aluminiumlegierungen aufzutragen. Insbesondere handelt es sich um die Oberflächen von verzinktem Eisen oder Stahl. Innerhalb dieser Ausführungsform des erfindungsgemäßen Verfahrens handelt es sich bei der zu beschichtenden Oberfläche um die Oberfläche eines Bandmetalls, insbesondere um elektrolytisch verzinkten oder heißverzinkten Stahl. Es kann sich dabei sowohl um einseitig wie auch um zweiseitig verzinktes Stahlband handeln.

Zink- oder Aluminiumlegierungen sowie deren Verwendung zum Beschichten von Stahl sind dem Fachmann aus dem Stand der Technik bekannt. Je nach dem gewünschten Anwendungszweck wählt der Fachmann Art und Menge von Legierungsbestandteilen aus. Typische Legierungsbestandteile von Zinklegierung umfassen insbesondere Al, Pb, Si, Mg, Sn, Cu oder Cd. Typische Bestandteile von Aluminiumlegierungen umfassen insbesondere Mg, Mn, Si, Zn, Cr, Zr, Cu oder Ti. Der Begriff "Zinklegierung" soll auch Aluminium-/Zinklegierungen einschließen, bei denen Aluminium und Zink in annähernd gleicher Menge vorhanden sind. Mit derartigen Legierungen beschichteter Stahl ist kommerzieller erhältlich. Der Stahl selbst kann die üblichen, dem Fachmann bekannten Legierungskomponenten enthalten. Sofern das Bauteil immobil ist oder die Bauteilgeometrie es nicht zulässt, kann die erfindungsgemäße Beschichtung auch mittels thermischen Spritzens (Spritzverzinken, Spritzaluminieren) aufgebracht werden.

Mittels des erfindungsgemäßen Verfahrens können insbesondere metallische Oberflächen vor Korrosion geschützt werden, die während des Gebrauchs in Kontakt mit atmosphärischer Luft stehen, es kann sich aber auch um Oberflächen handeln, die während des Gebrauchs in Kontakt mit Wasser, Erdreich oder anderen korrosiven Medien stehen.

Auf die erfindungsgemäße integrierte Vorbehandlungsschicht können in vorteilhafter Weise weitere Lackschichten unmittelbar aufgebracht werden, ohne dass vorher noch eine zusätzliche organische Grundierung aufgetragen werden muss. Selbstverständlich ist eine zusätzliche organische Grundierung aber in Spezialfällen möglich, obwohl bevorzugt darauf verzichtet wird. Die Art weiterer Lackschichten richtet sich nach der vorgesehenen Verwendung des Metalls in der nachfolgenden Anwendung.

Besonders bevorzugt kann das erfindungsgemäße Verfahren zum Schutz von metallischen Oberflächen eingesetzt werden, welche einer Korrosionsbelastung der Korrosivitätskategorien C2 (gemäß DIN EN ISO 12944) oder höher ausgesetzt sind, bevorzugt Korrosivitätskategorien C3 oder höher und besonders bevorzugt Korrosivitätskategorien C4 oder höher.

Dabei werden die Korrosivitätskategorien gemäß DIN EN ISO 12944 durch den flächenbezogenen Massenverlust bzw. die Dickenabnahme von unlegiertem Stahl beziehungsweise bei Zink definiert, deren Oberflächen 1 Jahr lang einer bestimmten korrosiven Belastung ausgesetzt sind.
- C2 (gering korrosiv): unlegierter Stahl:: Massenverlust > 10 - 200 g/m²
Dickenabnahme > 1,3 - 25 µm
- Zink:: Massenverlust > 0,7 - 5 g/m²
Dickenabnahme > 0,1 -0,7 µm
- C3 (mäßig korrosiv): unlegierter Stahl:: Massenverlust > 200 -400 g/m²
Dickenabnahme > 25 - 50 µm
- Zink:: Massenverlust > 5 - 15 g/m²
Dickenabnahme > 0,7 - 2,1 µm
- C4 (stark korrosiv): unlegierter Stahl:: Massenverlust > 400 - 650 g/m²
Dickenabnahme > 50 - 80 µm
- Zink:: Massenverlust > 15 - 30 g/m²
Dickenabnahme > 2,1 -4,2 µm
- C5-l/M (sehr stark): unlegierter Stahl:: Massenverlust > 650 - 1500 g/m²
Dickenabnahme > 80 - 200 µm
- Zink:: Massenverlust > 30 - 60 g/m²
Dickenabnahme > 4,2 - 8,4 µm

Bei den erfindungsgemäß eingesetzten Zubereitungen zum Aufbringen der integrierten Vorbehandlungsschichten kann es sich sowohl um Zubereitungen auf Basis organischer Lösungsmittel, um wässrige oder überwiegend wässrige Zubereitungen mit > 50 Gew.-% Wasseranteil oder um lösungsmittelfreie Zubereitungen handeln. Die Zubereitungen umfassen mindestens ein thermisch und/oder photochemisch vernetzbares Bindemittelsystem (A), mindestens einen anorganischen Füllstoff (B) sowie mindestens ein Korrosionsschutzmittel (C).

Bei der erfindungsgemäßen Beschichtung handelt es sich bevorzugt um eine chrom(VI)freie Beschichtung, besonders bevorzugt um eine chromfreie Beschichtung. Der Begriff "chrom(VI)frei" bzw. "chromfrei" im Sinne dieser Erfindung bedeutet, dass die eingesetzte Zubereitung selbst keine Chrom(VI)-Verbindungen bzw. überhaupt keine Chromverbindungen enthält, und dass auch keine korrosionshemmende Vorbehandlung der Metalloberfläche mit Chrom(VI)-Verbindungen bzw. Chromverbindungen durchgeführt wird. Dies schließt selbstverständlich nicht aus, dass sich - an sich unbeabsichtigt - Spuren von Chrom in der Schicht befinden können. Hierbei kann es sich beispielsweise um Chromspuren handeln, die im Zuge der Beschichtung eines chromhaltigen Stahles aus dem Stahl herausgelöst werden.

Der Begriff "vernetzbares Bindemittelsystem" bezeichnet im Folgenden diejenigen Anteile der Formulierung, die für die Filmbildung verantwortlich sind. Diese bilden beim thermischen und/oder photochemischen und/oder unter atmosphärischen Bedingungen Aushärten ein polymeres Netzwerk aus. Das vernetzbare Bindemittelsystem umfasst thermisch und/oder photochemisch und/oder unter atmosphärischen Bedingungen vernetzbare Komponenten. Die vernetzbaren Komponenten können niedermolekular, oligomer oder polymer sein und weisen in der Regel mindestens zwei vernetzbare Gruppen auf. Bei vernetzbaren Gruppen kann es sich sowohl um reaktive funktionelle Gruppen handeln, die mit Gruppen ihrer Art (mit sich selbst) oder mit komplementären, reaktiven funktionellen Gruppen reagieren können. Hierbei sind verschiedene Kombinationsmöglichkeiten möglich. Das Bindemittelsystem kann beispielsweise ein selbst nicht vernetzbares polymeres Bindemittel sowie einen oder mehrere niedermolekulare oder oligomere Vernetzer umfassen. Alternativ hierzu kann auch das polymere Bindemittelsystem selbst vernetzbare Gruppen aufweisen, die mit anderen vernetzbaren Gruppen am Polymer und/oder an einem zusätzlich eingesetzten Vernetzer reagieren können. Besonders vorteilhaft können auch vernetzbare Gruppen aufweisende Oligomere oder Prepolymere eingesetzt werden, die unter Verwendung von Vernetzern miteinander vernetzt werden.

Thermisch vernetzbare beziehungsweise härtende Bindemittelsysteme vernetzen beim Erwärmen der aufgebrachten Schicht auf Temperaturen oberhalb Raumtemperatur und werden vom Fachmann auch als Einbrennlacke bezeichnet. Sie weisen vernetzbare Gruppen auf, welche bei Raumtemperatur nicht oder zumindest nicht mit wesentlicher Geschwindigkeit, sondern erst bei höheren Temperaturen reagieren. Zur Ausführung des erfindungsgemäßen Verfahrens eignen sich insbesondere solche vernetzbaren Bindemittelsysteme, die erst bei Temperaturen oberhalb von 60°C, bevorzugt 80°C, besonders bevorzugt 100°C und am meisten bevorzugt bei 120°C vernetzen. Vorteilhafterweise können solche Bindemittelsysteme eingesetzt werden, die bei 100 bis 250°C, bevorzugt bei 120 bis 220°C und besonders bevorzugt bei 150 bis 200°C vernetzen.

Bei den Bindemittelsystemen (A) kann es sich beispielsweise um die auf dem Gebiet der Coil-Coating-Lacke üblichen Bindemittelsysteme handeln, weiterhin kann es sich gemäß einer weiteren Ausführungsform der Erfindung um ein auf dem Gebiet der Korrosionsschutzanstriche und Beschichtungen übliches Bindmittelsystem handeln. Derartige Bindemittel bzw. Bindemittelsysteme sind dem Fachmann prinzipiell bekannt. Selbstverständlich können auch Mischungen verschiedener Bindemittelsysteme eingesetzt werden, vorausgesetzt es treten durch die Mischung keine unerwünschten Effekte auf. Die mit Hilfe von Coil-Coating-Lacken aufgebrachten Schichten müssen eine ausreichende Flexibilität aufweisen. Bindemittelsysteme für Coil-Coating-Lacke weisen daher bevorzugte Weichsegmente auf. Geeignete Bindemittel beziehungsweise Bindemittelsysteme sind dem Fachmann bekannt, selbstverständlich können auch Mischungen verschiedener Polymere eingesetzt werden. Beispiele geeigneter Bindemittel umfassen (Meth)acrylat, (Co)polymerisate, partiell verseifte Polyvinylester, Polyester, Alkydharze, Polylactone, Polycarbonate, Polyether, Epoxidharz-Amin-Addukte, Polyharnstoffe, Polyamide, Polyimide und Polyurethane.

### Thermisch aushärtbare Zubereitung

Für thermisch aushärtende Systeme werden zur Ausführung der Erfindung bevorzugt Bindemittelsysteme auf Basis von Polyestern, Epoxidharzen, Polyurethanen oder Acrylaten eingesetzt.

Bindemittel auf Basis von Polyestern können in bekannter Art und Weise aus niedermolekularen Dicarbonsäuren und Dialkoholen sowie gegebenenfalls weiteren Monomeren aufgebaut werden. Weitere Monomere umfassen insbesondere verzweigend wirkende Monomere, wie beispielsweise Tricarbonsäuren oder Trialkohole. Für den Einsatz zum Coil-Coating werden im Allgemeinen Polyester mit niedrigem Molekulargewicht eingesetzt, bevorzugt solche mit Mₙ von 500 bis 1000 g/mol, bevorzugt 1000 bis 5000 g/mol und besonders bevorzugt 2000 bis 4000 g/mol.

Die Härte und Flexibilität der Schichten auf Basis von Polyestern können durch die Auswahl von "harten" oder "weichen" Monomeren beeinflusst werden. Beispiele "harter" Dicarbonsäuren umfassen aromatische Dicarbonsäuren oder deren hydrierte Derivate wie beispielsweise Isophthalsäure, Terephthalsäure, Phthalsäure, Hexahydrophthalsäure beziehungsweise Derivate hiervon, insbesondere deren Anhydride oder Ester. Beispiele "weicher" Dicarbonsäuren umfassen insbesondere aliphatische 1,ω-Dicarbonsäuren mit mindestens 4 C-Atomen wie Adipinsäure, Azelainsäure, Sebacinsäure oder Dodecandisäure. Beispiele "harter" Dialkohole umfassen Ethylenglykol, 1,2-Propandiol, Neopentylglykol oder 1,4-Cyclohexandimethanol. Beispiele "weicher" Dialkohole umfassen Diethylglykol, Triethylenglykol, aliphatische 1, ω-Dialkohole mit mindestens 4 C-Atomen wie 1,4-Butandiol, 1,6-Hexandiol, 1-8 Octandiole oder 1,12-Dodecandiol. Bevorzugte Polyester zur Ausführung der Erfindung umfassen mindestens ein "weiches" Monomer.

Polyester für Beschichtungen sind kommerziell erhältlich. Einzelheiten zu Polyestern sind beispielsweise dargestellt in *"*Paints and Coatings - Saturated Polyester Coatings" in Ulmann's Encyclopedia of Industrial Chemistry, 6th Edition, 2000, Electronically Release.

Bindemittelsysteme auf Epoxidbasis können für Formulierungen auf anorganischer oder auf wässriger Basis eingesetzt werden. Epoxyfunktionelle Polymere können beispielsweise durch die Reaktion von epoxyfunktionellen Monomeren wie Bisphenol-A-Diglycidylether, Bisphenol-F-Diglydicylether oder Hexandioldiglycidylether mit Alkoholen wie beispielsweise Bisphenol-A oder Bisphenol-F hergestellt werden. Als Weichsegmente eignen sich insbesondere Polyoxyethylen- und/oder Polyoxypropylensegmente. Diese können vorteilhaft durch die Verwendung von ethoxyliertem und/oder propoxyliertem Bisphenol-A eingebaut werden. Die Bindemittel sollten bevorzugt chloridfrei sein. Epoxidfunktionelle Polymere sind kommerziell erhältlich, beispielsweise unter dem Namen Epon^{®} oder Epikote^{®}. Einzelheiten zu epoxyfunktionellen Polymeren sind beispielsweise dargestellt in *"*Epoxy Resins" in Ulmann's Encyclopedia of Industrial Chemistry, 6th Edition 2000, Electronic Release.

Die epoxyfunktionellen Bindemittel können auch noch weiter funktionalisiert werden. Epoxidharz-Amin-Addukte können beispielsweise durch Reaktion der epoxyfunktionellen Polymere mit Aminen, insbesondere sekundären Aminen wie beispielsweise Diethanolamin oder N-Methylbutanolamin erhalten werden.

Bindemittel auf Basis von Polyacrylaten eignen sich insbesondere für Formulierungen auf Wasserbasis. Beispiele geeigneter Acrylate umfassen Emulsionspolymerisate oder -copolymerisate, insbesondere anionisch stabilisierte Acrylatdispersionen, erhältlich aus Acrylsäure und/oder Acrylsäurederivaten, beispielsweise Acrylsäureestern wie mit Ethyl(meth)acrylat, Ethyl(meth)acrylat, Butyl(meth)acrylat oder 2-Ethylhexyl(meth)acrylat und/oder vinylaromatischen Monomeren wie Styrol sowie gegebenenfalls vernetzenden Monomeren. Die Härte der Bindemittel kann durch das Verhältnis von "harten" Monomeren wie Styrol oder Methmethacrylat und "weichen" Monomeren wie Butylacrylat oder 2-Ethylhexacrylat eingestellt werden. Besonders bevorzugt zur Herstellung von Acrylatdispersionen werden weiterhin Monomere eingesetzt, welche funktionelle Gruppen aufweisen, die mit Vernetzern reagieren können. Hierbei kann es sich insbesondere um OH-Gruppen handeln. OH-Gruppen können durch die Verwendung von Monomeren wie Hydroxyethylacrylat, Hydroxypropylacrylat, Hydroxybutylacrylat oder N-Methylolacrylamid oder auch von Epoxyacrylaten gefolgt von Hydrolyse in die Polyacrylate eingebaut werden. Geeignete Polyacrylat-Dispersionen sind kommerziell erhältlich.

Bindemittel auf Basis von Polyurethan-Dispersionen eignen sich insbesondere für wasserbasierende Formulierungen. Dispersionen von Polyurethanen lassen sich in prinzipiell bekannter Art und Weise erhalten, indem man zur Stabilisierung der Dispersion in die PU-Kette ionische und/oder hydrophile Segmente einbaut. Als Weißsegmente können bevorzugt 20 bis 100 mol-%, bezogen auf die Menge aller Diole, an höher molekularen Diolen, bevorzugt Polyesterdiolen, mit einem Mn von ca. 500 bis 5000 g/mol, bevorzugt 100 bis 3000 g/mol eingesetzt werden. Besonders vorteilhaft können zur Ausführung der vorliegenden Erfindung Polyurethan-Dispersionen eingesetzt werden, welche Bis(4-isocyanatocyclohexyl)methan als Isocyanatkomponente enthalten. Derartige Polyurethan-Dispersionen sind beispielsweise in der DE-A 199 14 896 offenbart.

Geeignete Vernetzer zur thermischen Vernetzung sind dem Fachmann prinzipiell bekannt. Geeignet sind beispielsweise Vernetzer auf Basis von Epoxiden, bei denen zwei oder mehrere Epoxygruppen mittels einer verknüpfenden Gruppe miteinander verbunden sind. Beispiele umfassen niedermolekulare Verbindungen mit zwei Epoxygruppen wie Hexandioldiglydidylether, Phthalsäurediglycidylether oder cycloaliphatische Verbindungen wie 3,4-Epoxycyclohexancarbonsäure-3',4'-epoxycyclohexylmethylester.

Weiterhin geeignet als Vernetzer sind hochreaktive Melaminderivate wie beispielsweise Hexamethoxymethylmelamin, Hexabutoxymethylmelamin oder auch gegebenenfalls modifizierte Aminoplastharze. Derartige Vernetzer sind kommerziell erhältlich, beispielsweise als Luwipal^{®} (Fa. BASF AG).

Besonders bevorzugt zur Ausführung der Erfindung werden blockierte Polyisocyanate als Vernetzer eingesetzt. Bei der Blockierung wird die Isocyanatgruppe reversibel mit einem Blockierungsmittel umgesetzt. Das Blockierungsmittel wird beim Erhitzen wieder abgespalten. Beispiele geeigneter Blockierungsmittel sind in DE-A 19914896, Spalte 12, Zeile 13 bis Spalte 13, Zeile 2 offenbart. Besonders bevorzugt können mit e-Caprolactam blockierte Polyisocyanate eingesetzt werden.

Zur Beschleunigung der Vernetzung können den Zubereitungen weiterhin geeignete Katalysatoren hinzugefügt werden.

Der Fachmann trifft je nach dem eingesetzten Bindemittel und dem gewünschten Ergebnis eine geeignete Auswahl unter den Vernetzern. Selbstverständlich können auch Gemische verschiedener Vernetzer eingesetzt werden, vorausgesetzt, die Eigenschaften der Schicht werden dadurch nicht negativ beeinflusst. Die Menge an Vernetzer kann vorteilhaft 10 bis 35 Gew.-% bezüglich der Gesamtmenge des Bindemittels betragen.

Die Vernetzung der epoxyfunktionellen Polymere kann beispielsweise mit Vernetzern auf Basis von Polyaminen, wie beispielsweise Diethyltriamin, Aminaddukten oder Polyaminoamiden erfolgen. Vorteilhaft sind beispielsweise Vernetzer auf Basis von Carbonsäureanhydriden oder die bereits erwähnten Vernetzer auf Basis von Melamin. Bevorzugt sind insbesondere auch die bereits erwähnten blockierten Polyisocyanate.

Zur thermischen Vernetzung der Acrylatdispersionen können beispielsweise die bereits erwähnten Vernetzer auf Basis von Melamin oder blockierte Isocyanate eingesetzt werden, darüber hinaus eignen sich auch epoxyfunktionelle Vernetzer.

Zur thermischen Vernetzung von Polyurethandispersionen und/oder Polyestern können beispielsweise die bereits erwähnten Vernetzer auf Basis von Melamin, blockierte Isocyanate oder epoxyfunktionelle Vernetzer eingesetzt werden.

### Photochemisch vernetzbare Zubereitung

Die Bindemittelsysteme (A) umfassen bei photochemisch beziehungsweise strahlenhärtbaren vernetzbaren Zubereitungen photochemisch vernetzbare Gruppen. Hierbei werden Zubereitungen eingesetzt, welche neben den erfindungsgemäß verwendeten Korrosionsinhibitoren eine oder bevorzugt mehrere niedermolekulare, oligomere und/oder polymere strahlenhärtbare Komponenten enthalten, welche bei der photochemischen Vernetzung eine polymere Bindemittelmatrix bilden. Der Begriff photochemische Vernetzung soll die Vernetzung mit allen Arten energiereicher Strahlung bis beispielsweise UV-, VIS-, NIR- oder Elektronenstrahlung umfassen. Im Rahmen der Erfindung kann es sich auch um kombinierte Techniken handeln, bei denen man gleichzeitig nacheinander Bestrahlt und Erwärmt. Bei den photochemisch vernetzbaren Gruppen kann es sich um alle Arten photochemisch vernetzbarer Gruppen handeln, bevorzugt handelt es sich hierbei aber um ethylenisch ungesättigte Gruppen.

Photochemisch vernetzbare Bindemittelsysteme umfassen in der Regel oligomere oder polymere Verbindungen mit photochemisch vernetzbaren Gruppen sowie gegebenenfalls daneben noch Reaktivverdünner, in der Regel Monomere. Reaktivverdünner weisen eine niedrigere Viskosität als die oligo- oder polymeren Vernetzer auf und nehmen daher in einem strahlenhärtbaren System die Rolle eines Verdünners ein. Zur photochemischen Vernetzung umfassen derartige Bindemittelsysteme weiterhin in der Regel einen oder mehrere Photoinitiatoren.

Beispiele photochemisch vernetzbarer Bindemittelsysteme umfassen beispielsweise multifunktionelle (Meth)acrylate, Urethan(meth)acrylate, Polyester(meth)acrylate, Epoxy(meth)acrylate, Carbonat(meth)acrylate, Polyether(meth)acrylate, gegebenenfalls in Kombination mit Reaktivverdünnern wie Methyl(meth)acrylat, Butandioldiacrylat, Hexandioldiacrylat oder Trimethylpropantriacrylat. Genauere Einzelheiten zu geeigneten strahlenhärtbaren Bindemitteln sind in der WO 2005/080484, Seite 3, Zeile 10 bis Seite 16, Zeile 35 dargestellt. Geeignete Photoinitiatoren finden sich in der besagten Schrift auf Seite 18, Zeile 8 bis Seite 19, Zeile 10. Die genannten Seiten der Literaturstelle sind durch Bezugnahme in die vorliegende Anmeldung eingeschlossen.

Selbstverständlich können zur Ausführung der vorliegenden Erfindung auch Bindemittelsysteme eingesetzt werden, die kombiniert thermisch und photochemisch ausgehärtet werden können, welche auch als Dual-Cure-Systeme bekannt sind.

### Vernetzbare Komponenten

Die eingesetzten Formulierungen umfassen zumindest eine vernetzbare Komponente, welche mindestens zwei vernetzbare Gruppen aufweist. In der Regel handelt es sich hierbei um oligomere- oder polymere Verbindungen. Darüber hinaus können noch Reaktivverdünner anwesend sein. Reaktivverdünner können ein oder auch mehrere vernetzbare Gruppen aufweisen. Es handelt sich hierbei in der Regel um Monomere. Reaktivverdünner weisen eine niedrigere Viskosität als die Oligo- oder Polymervernetzer auf und nehmen daher in einem strahlenhärtbaren System die Rolle eines Verdünners ein.

Die Art der strahlungshärtbaren Gruppe ist nicht beschränkt, bevorzugt handelt es sich aber um Gruppen, welche ethylenisch ungesättigte Gruppen aufweisen. Beispielsweise kann es sich um (Meth)acrylatgruppen, Fumaratgruppen, Maleinatgruppen oder Crotonatgruppen handeln. Derartige Gruppen lassen sich beispielsweise durch Umsetzung α,β-ethylenisch ungesättigter Mono- und/oder Dicarbonsäuren oder deren Anhydriden mit Reaktionspartnern erhalten, welche über Gruppen verfügen, die mit den Carbonsäuregruppen reagieren können. Beispielsweise können die Reaktionspartner OH-Gruppen oder NH₂-Gruppen aufweisen, die mit den Carbonsäuren beziehungsweise deren Derivaten unter Bildung von Carbonsäureestern beziehungsweise Carbonsäureamiden reagieren. Als Carbonsäuren können beispielsweise (Meth)acrylsäure, Maleinsäure, Maleinsäureanhydrid, Fumarsäure, Crotonsäure oder Itakonsäure eingesetzt werden.

Bevorzugt handelt es sich bei den strahlungshärtbaren Gruppen um (Meth)acrylatgruppen, besonders bevorzugt um Acrylatgruppen.

### Multifunktionelle (Meth)acrylate

Als vernetzende Komponenten können beispielsweise multifunktionelle (Meth)acrylate eingesetzt werden, die mindestens 2, bevorzugt 3 bis 10 und besonders bevorzugt 3 bis 6 (Meth)acrylatgruppen aufweisen.

Hierbei kann es sich beispielsweise um Ester der (Meth)acrylsäure mit mindestens zweiwertigen Polyalkoholen, wie beispielsweise Polyolen, Polyether- oder Polyesterolen oder Polyacrylatpolyolen mit einer mittleren OH-Funktionalität von mindestens 2, bevorzugt von 3 bis 10 handeln.

Bei den Alkoholkomponenten kann es sich beispielsweise um alkoxylierte Produkte handeln, die aus den entsprechenden Di- oder Polyolen durch Alkoxylierung in prinzipiell bekannter Art und Weise erhalten werden können. Bevorzugt handelt es sich dabei um (Meth)acrylate von ein bis 30-fach und besonders bevorzugt 3 bis 20-fach ethoxyliertem, propoxyliertem oder gemischt ethoxyliertem und propoxyliertem und insbesondere ausschließlich ethoxyliertem Neopentylglykol, Trimethylolpropan, Trimethylolethan oder Pentaerythrit.

Bei den multifunktionellen (Meth)acrylaten kann es sich auch um Ester und Amide von Aminoalkoholen mit den zuvor genannten α,β-ethylenisch ungesättigten Mono- und/oder Dicarbonsäuren oder Hydroxyalkylvinylethern wie beispielsweise Hydroxybutylvinylether handeln.

Die beschriebenen, einfachen multifunktionellen (Meth)acrylate aus (Meth)acrylatgruppen sowie Alkoholen beziehungsweise alkoxylierten Alkoholen können als alleinige vernetzende Komponenten eingesetzt werden. Ihre Menge beträgt im Allgemeinen 0 bis 80 Gew.-% bezüglich der Summe aller Komponenten der Formulierung. Sie können aber auch bevorzugt im Gemisch mit anderen vernetzenden Komponenten eingesetzt werden.

Bei anderen vernetzenden Komponenten zur Ausführung der vorliegenden Erfindung kann es sich insbesondere um multifunktionelle (Meth)acrylate, ausgewählt aus der Gruppe von Urethan(meth)acrylaten, Epoxy(meth)acrylaten, Polyether(meth)acrylaten, Polyester(meth)acrylaten oder Polycarbonat(meth)acrylaten handeln. Weiterhin können auch Gemisch davon eingesetzt werden. Bevorzugt werden Urethan(meth)acrylate eingesetzt.

### Urethan(meth)acrylate

Urethan(meth)acrylate sind zum Beispiel erhältlich durch die Umsetzung von Polyisocyanaten mit Hydroxyalkyl(meth)acrylaten oder -vinylethern und gegebenenfalls Kettenverlängerungsmitteln wie Diolen, Polyolen, Diaminen, Polyaminen oder Dithiolen oder Polythiolen.

Derartige Urethan(meth)acrylate enthalten als Aufbaukomponenten im Wesentlichen:
(U1) mindestens ein organisches aliphatisches, aromatisches oder cycloaliphatisches Di- oder Polyisocyanat
(U2) mindestens eine Verbindung mit mindestens einer gegenüber Isocyanat reaktiven Gruppe und mindestens einer radikalisch polymerisierbaren ungesättigten Gruppe, und
(U3) optional mindestens eine Verbindung mit mindestens zwei gegenüberliegenden Isocyanat reaktiven Gruppen.

Bei der Komponente (U1) handelt es sich um übliche aliphatische, aromatische und/oder cycloaliphatische Di- beziehungsweise Polyisocyanate, bevorzugt um solche mit 4 bis 20 C-Atomen. Ebenfalls können auch Gemische verschiedener Isocyanate eingesetzt werden.

Beispiele derartiger Isocyanate umfassen übliche aliphatische Diisocyanate wie 1,4-Tetramethylendiisocyanat, 1,6-Hexamethylendiisocyanat, 1,8-Octamethylendiisocyanat, 1,10-Decamethylendiisocyanat, 1,12-Dodecamethylendiisocyanat, Tetradecamethylendüsocyanat, cycloaliphatische Diisocyanate wie 1,4-, 1,3- oder 1,2-Diisocyanatocyclohexan, 4,4'- oder 2,4'-Di(isocyanatocyclohexyl)methan, Isophorondiisocyanat, 1,3- oder 1,4-bis-(Isocyanatomethyl)cyclohexan oder aromatische Diisocyanate wie 2,4- oder 2,6-Toluylendüsocyanat, 2,4'- oder 4,4'-Diisocyanatodiphenylmethan, 1,3- oder 1,4-Phenyldiisocyanat, 1,5-Naphthylendiisocyanat, Diphenylen-4,4'-diisocyanat, 4,4'-Diisocyanato-3,3'-dimethyldiphenyldiisocyanat, 3-Methyldiphenylmethan-4,4'-diisocyanat oder Diphenylether-4,4'-diisocyanat.

Polyisocyanate sind beispielsweise solche von den genannten Diisocyanaten abgeleiteten Isocyanurat-, Biuret-, Uretdion-, Iminooxadiazintrion- und/oder Carbondiimidgruppen enthaltenden Polyisocyanate.

Zur Ausführung der vorliegenden Erfindung werden bevorzugt aliphatische Diisocyanate eingesetzt, bevorzugt aliphatische Isocyanate mit 4 bis 20 C-Atomen.

Als Komponente (U2) können beispielsweise Ester 2- oder mehrwertiger Alkohole mit α,β-ethylenisch ungesättigten Mono- und/oder Dicarbonsäuren und deren Anhydriden eingesetzt werden, jeweils mit der Maßgabe, dass mindestens eine der im Alkohol vorhandenen OH-Gruppe unverestert bleibt. Beispiele derartiger Carbonsäuren sowie derartige Alkohole wurden bereits vorstehend genannt.

Vorzugsweise sind die Verbindungen (U2) ausgewählt unter 2-Hydroxyethylacrylat, 2-Hydroxyethylmethacrylat, 2-Hydroxypropylacrylat, 2-Hydroxypropylmethacrylat, 3-Hydroxybutylacrylat, 3-Hydroxybutylmethacrylat, 4-Hydroxybutylacrylat, 4-Hydroxybutylmethacrylat, 6-Hydroxyethylhexylacrylat, 6-Hydroxyhexylmethacrylat, 3-Hydroxy-2-ethylhexacrylat, 3-Hydroxy-2-ethylhexylmethacrylat, Trimethylolpropanmono- oder -diacrylat, Pentaerithritdi- oder -triacrylat und Mischungen davon.

Bei der optionalen Komponente (U3) handelt es sich um wenigstens eine Verbindung mit mindestens zwei gegenüber Isocyanatgruppen reaktiven Gruppen, die ausgewählt sind unter Hydroxy-, Mercapto-, primären und/oder sekundären Aminogruppen. Derartige Verbindungen dienen zur Kettenverlängerung.

Geeignete Verbindungen (U3) sind sowohl niedermolekulare Alkohole als auch polymere Polyole.

Niedermolekulare Alkohole haben ein Molekulargewicht von höchstens 500 g/mol. Besonders bevorzugt sind Alkohole mit 2 bis 20, bevorzugt 4 bis 20 Kohlenstoffatomen und 2 bis 6 Hydroxylgruppen. Beispiele bevorzugter Diole umfassen 1,2-, 1,3- oder 1,4-Butandiol, 1,4-Pentandiol, 1,5-Pentandiol, 1,6-Hexandiol, 2,5-Hexandiol, Dihydroxymethylcyclohexan oder bis-Hydroxycyclohexylpropan.

Das zahlenmittlere Molekulargewicht Mₙ bevorzugt eingesetzter polymerer Polyole liegt im Bereich von etwa 500 g/mol bis 100.000 g/mol, besonders bevorzugt von 500 g/mol bis 10.000 g/mol. Die OH-Zahlen liegen vorzugsweise in einem Bereich von etwa 20 bis 300 mg KOH/g Polymer.

Beispiele bevorzugter polymerer Polyole umfassen Copolymere, die wenigstens einen der zuvor bei (U2) genannten OH-Gruppen-haltigen Ester und wenigstens ein weiteres Comonomer, vorzugsweise ausgewählt unter Vinylaromaten, wie zum Beispiel Styrol, Estern der zuvor genannten α,β-ungesättigten Mono- und/oder Dicarbonsäuren mit Monoalkoholen, Vinylestern von bis zu 20 Kohlenstoffatomen enthaltenden Carbonsäuren, Vinylhalogeniden, nicht-aromatischen Kohlenwasserstoffen mit 4 bis 8 Kohlenstoffatomen und ein oder zwei Doppelbindungen, ungesättigten Nitrilen und Mischungen davon einpolymerisiert erhalten. Dazu zählen weiterhin (teil)hydrolysierte Vinylester-Polymere, bevorzugt Polyvinylacetate.

Hierzu zählen weiterhin Polyesterole auf Basis von aliphatischen, cycloaliphatischen und/oder aromatischen Di-, Tri- und/oder Polycarbonsäuren mit Di-, Tri- und/oder Polyolen sowie Polyesterole auf Lactonbasis.

Polyesterole sind zum Beispiel aus Ulmann's Encyclopädie der Technischen Chemie, 4. Auflage, Band 19, Seiten 62 bis 65 bekannt. Bevorzugt werden Polyesterole eingesetzt, die durch Umsetzung von zweiwertigen Alkoholen mit zweiwertigen Carbonsäuren erhalten werden. Anstelle der freien Polycarbonsäuren können auch die entsprechenden Polycarbonsäureanhydride oder entsprechende Polycarbonsäureester von niederen Alkoholen oder deren Gemische zur Herstellung der Polyesterole verwendet werden. Die Polycarbonsäuren können aliphatisch, cycloaliphatisch, araliphatisch, aromatisch oder heterocyclisch sein und gegebenenfalls zum Beispiel durch Halogenatome substituiert und/oder ungesättigt sein.

Bevorzugt sind Dicarbonsäuren der allgemeinen Formel HOOC-(CH₂)_{y}-COOH, wobei y eine Zahl von 1 bis 20, bevorzugt eine gerade Zahl von 2 bis 20 ist, besonders bevorzugt Bernsteinsäure, Adipinsäure, Sebacinsäure und Dodecandicarbonsäure ist. Bevorzugt sind Alkohole der allgemeinen Formel HO-(CH₂)ₓ-OH, wobei x eine Zahl von 1 bis 20, bevorzugt eine gerade Zahl von 2 bis 20 ist. Bevorzugt sind Ethylenglykol, Butan-1,4-Diol, Hexan-1,6-diol, Octan-1,8-diol und Dodecan-1,12-diol. Weiterhin bevorzugt ist Neopentylglykol.

Ferner kommen auch Polycarbonatdiole, wie sie beispielsweise durch Umsetzung von Phosgen mit einem Überschuss von den als Aufbaukomponenten für die Polyesterpolyole genannten niedermolekularen Alkohole erhalten werden können, in Betracht.

Geeignet sind auch Polyesterdiole auf Lactonbasis, wobei es sich um Homo- oder Mischpolymerisate von Lactonen, bevorzugt um endständige Hydroxylgruppen aufweisende Anlagerungsprodukte von Lactonen an geeignete difunktionelle Startermoleküle handelt.

Weiterhin können als (U3) auch Polyetherole, die durch Polymerisation von cyclischen Ethern oder durch Umsetzung von Alkylenoxiden mit einem Startermolekül erhältlich sind, sowie durch Umsetzung von Polyetherolen mit Ammoniak erhältliche α,ώ-Di-aminopropylether. Derartige Produkte sind als Jeffamine^{®} kommerziell erhältlich (Fa. Huntsmann).

Die zuvor genannten Komponenten (U3) können einzelne oder als Gemische eingesetzt für Synthese der Urethan(meth)acrylate eingesetzt werden.

Die Urethan(meth)acrylate haben bevorzugt ein zahlenmittleres Molekulargewicht Mₙ von 500 g/mol bis 20.000 g/mol, insbesondere von 500 g/mol bis 10.000 g/mol, besonders bevorzugt 600 g/mol bis 3.000 g/mol und einen Gehalt von 1 bis 5, besonders bevorzugt von 2 bis 4 mol (Meth)acrylatgruppen pro 100 g Urethan(meth)acrylat.

Besonders bevorzugte Urethan(meth)acrylate weisen eine mittlere (Meth)acrylat-funktionalität von 2 bis 10 auf.

### Polyester(meth)acrylate

Zur Ausführung der vorliegenden Erfindung geeignete Polyester(meth)acrylate lassen sich in prinzipiell bekannter Art und Weise erhalten, indem man die oben als Komponente (U3) erwähnten Polyesterpropylole mit (Meth)acrylsäure umsetzt. Zur Veresterung von (Meth)acrylsäure mit der Hydroxyverbindung sind die dem Fachmann bekannten Verfahren geeignet.

Bei der Veresterung von (Meth)acrylsäure mit der Hydroxyverbindung werden bevorzugt 0,1 bis 1,5, besonders bevorzugt 0,5 bis 1,4 und ganz besonders bevorzugt 0,7 bis 1,3 Äquivalente (Meth)acrylsäure, bezogen auf ein Hydroxyäquivalent der Hydroxyverbindungen eingesetzt. Die Umsetzung der (Meth)acrylsäure mit den Hydroxyverbindungen kann zum Beispiel in Gegenwart eines üblichen, sauren Veresterungskatalysators vorgenommen und gebildetes Reaktionswasser mittels üblicher Methoden entfernt werden. Zur Vermeidung einer vorzeitigen Polymerisation ist es empfehlenswert, die Umsetzung von (Meth)acrylsäure in Gegenwart geringer Mengen von üblichen Initiatoren zur Verhinderung thermischer Polymerisation durchzuführen.

Nach der Veresterung kann das Lösungsmittel, zum Beispiel der Kohlenwasserstoff, aus dem Reaktionsgemisch destillativ, gegebenenfalls unter vermindertem Druck, entfernt werden. Der Veresterungskatalysator kann in geeigneter Weise neutralisiert werden, zum Beispiel durch Zusatz von tertiären Aminen oder Alkalihydroxiden. Auch überschüssige (Meth)acrylsäure kann teilweise zum Beispiel durch Destillation im Vakuum entfernt werden.

Zur Herstellung von Polyester(meth)acrylaten ist es möglich, die (Meth)acrylsäure zusammen mit Ausgangsstoffen des Hydroxygruppen-haltigen Polyesters, zum Beispiel Dicarbonsäuren oder deren Anhydriden und Diolen beziehungsweise Polyolen vorzulegen und die Ausgangsstoffe zusammen mit der (Meth)acrylsäure in einer Stufe umzusetzen.

### Epoxy(meth)acrylate

Zur Ausführung der vorliegenden Erfindung eingesetzte Epoxy(meth)acrylate sind bevorzugt erhältlich durch Umsetzung von Epoxiden mit (Meth)acrylsäure. Als Epoxide in Betracht kommen zum Beispiel epoxydierte Olefine, aromatische Glycidylether oder aliphatische Glycidylether, bevorzugt solche von aromatischen oder aliphatischen Glycidylethern. Beispiele bevorzugter epoxydierter Olefine umfassen Ethylenoxid, Propylenoxid, *iso*-Butylenoxid, Vinyloxiran, Styroloxid oder Epichlorhydrin, besonders bevorzugt sind Ethylenoxid, Propylenoxid oder Epichlorhydrin und ganz besonders bevorzugt sind Ethylenoxid oder Epichlorhydrin.

Beispiele bevorzugter aromatischer Glycidylether umfassen Bisphenol-A-diglycidylether, Bisphenol-F-diglycidylether, Bisphenol-B-diglycidylether, Bisphenol-S-diglycidylether, besonders bevorzugt ist Bisphenol-A-diglycidylether, bevorzugte aliphatische Glycidylether sind beispielsweise 1,4-Butandioldiglycidylether, 1,6-Hexandioldiglycidylether, Trimethylolpropantriglycidylether, Pentaerythrittetraglycidylether und (2,2-bis[4-(2,3-Epoxypropoxyl)cyclohexyl]propan.

### Besonders bevorzugt sind die oben erwähnten aromatischen Glycidylether.

Die Epoxy(meth)acrylate und -vinylether haben vorzugsweise einen zahlenmittleres Molekulargewicht Mₙ von 200 g/mol bis 20.000 g/mol, besonders bevorzugt von 200 g/mol bis 10.000 g/mol und ganz besonders bevorzugt von 250 g/mol bis 3.000 g/mol, der Gehalt an (Meth)acryl- oder Vinylethergruppen beträgt vorzugsweise 1 bis 5, besonders bevorzugt 2 bis 4 pro 1000 g Epoxy(meth)acrylat oder Vinyletherepoxid.

Bevorzugte Epoxy(meth)acrylate weisen eine OH-Zahl von 40 bis 400 mg KOH/g sowie eine mittlere (Meth)acrylatfunktionalität von 2 bis 8 auf.

Besonders bevorzugte Epoxy(meth)acrylate sind solche, wie sie aus Verfahren erhalten werden gemäß EP-A 54105, DE-A 33 16 593, EP-A 680 985 und EP-A 279 303, bei denen in einer ersten Stufe ein (Meth)acrylsäureester aus (Meth)acrylsäure und Hydroxyverbindungen hergestellt wird und in einer zweiten Stufe überschüssige (Meth)acrylsäure mit Epoxiden umgesetzt wird.

### Carbonat(meth)acrylate

Zur Ausführung der vorliegenden Erfindung geeignete Carbonat(meth)acrylate enthalten im Mittel vorzugsweise 2 bis 5, insbesondere 2 bis 4, besonders bevorzugt 2 bis 3 (Meth)acrylgruppen und ganz besonders bevorzugt 2 (Meth)acrylgruppen.

Das zahlenmittlere Molekulargewicht Mₙ der Carbonat(meth)acrylate ist vorzugsweise < 3000 g/mol, besonders bevorzugt < 1.500 g/mol, besonders bevorzugt < 800 g/mol.

Die Carbonat(meth)acrylate sind in einfacher Weise erhältlich durch Umesterung von Kohlensäureestern mit mehrwertigen, vorzugsweise zweiwertigen Alkoholen (Diolen, zum Beispiel Hexandiol) und anschließender Veresterung der freien OH-Gruppen mit (Meth)acrylsäure oder auch Umesterung mit (Meth)acrylsäureestern, wie es zum Beispiel in EP-A 92269 beschrieben ist. Erhältlich sind sie auch durch Umsetzung von Phosgen, Harnstoffderivaten mit mehrwertigen, zum Beispiel zweiwertigen Alkoholen.

In analoger Weise sind auch Vinylethercarbonate erhältlich, indem man einen Hydroxyalkylvinylether mit Kohlensäureestern sowie gegebenenfalls zweiwertigen Alkoholen umsetzt.

Ebenfalls denkbar sind auch (Meth)acrylate oder Vinylether von Polycarbonatpolyolen, wie das Reaktionsprodukt aus einem der genannten Di- oder Polyole und einem Kohlensäureester sowie einem Hydroxylgruppen-haltigen (Meth)acrylat oder Vinylether.

Geeignete Kohlensäureester sind zum Beispiel Ethylen-, 1,2- oder 1,3-Propylencarbonat, Kohlensäuredimethyl-, Diethyl- oder Dibutylester.

Geeignete Hydroxylgruppen-haltige (Meth)acrylate sind beispielsweise 2-Hydroxyethyl(meth)acrylat, 2- oder 3-Hydroxypropyl(meth)acrylat, 1,4-Butandiol-mono(meth)acrylat, Neopentylglykolmono(meth)acrylat, Glycerinmono- und Di(meth)acrylat, Trimethylolpropanmono- und Di(meth)acrylat sowie Pentaerythritmono-, -di- und -tri(meth)acrylat.

Geeignete Hydroxylgruppen-haltige Vinylether sind zum Beispiel 2-Hydroxyethylvinylether und 4-Hydroxybutylvinylether.

Besonders bevorzugte Carbonat(meth)acrylate sind solche der Formel: 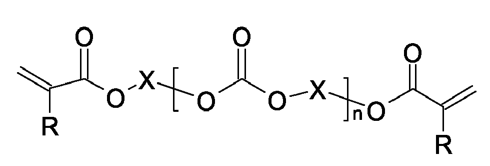 worin R für H oder CH₃,
X für C₂-C₁₈-Alkylengruppen und
n für eine ganze Zahl von 1 bis 5, vorzugsweise von 1 bis 3 steht.

R steht vorzugsweise für H und X steht vorzugsweise für C₂-C₁₀-Alkylen, beispielsweise 1,2-Ethylen, 1,2-Propylen, 1,3-Propylen, 1,4-Butylen oder 1,6-Hexylen, besonders bevorzugt für C₄-C₈-Alkylen. Ganz besonders bevorzugt steht X für C₆-Alkylen.

Vorzugsweise handelt es sich bei den Carbonat(meth)acrylaten um aliphatische Carbonat(meth)acrylate.

Hierzu zählen weiterhin auch übliche, dem Fachmann bekannte Polycarbonate mit endständigen Hydroxylgruppen, die zum Beispiel durch Umsetzung der zuvor genannten Diole mit Phosgen oder Kohlensäurediestern erhältlich sind.

### Polyether(meth)acrylate

Polyether(meth)acrylate sind beispielsweise Mono-(meth)acrylate von Poly-THF mit einem Molgewicht zwischen 162 und 2000, Poly-1,3-propandiol mit einem Molgewicht zwischen 134 und 2000 oder Polyethylenglykol mit einem Molgewicht zwischen 238 und 2000.

### Reaktivverdünner

In der photochemisch vernetzbaren Zubereitung können neben den genannten vernetzbaren Komponenten optional auch noch übliche Reaktivverdünner eingesetzt werden. Reaktivverdünner weisen in der Regel 1 bis 6 ethylenisch ungesättigte Doppelbindungen auf. Sie dienen der Beeinflussung der Vernetzungsdichte und können in strahlenhärtbaren Systemen auch als Lösungsmittel zur Einstellung der Viskosität der Zubereitung fungieren. Geeignete Reaktivverdünner sind dem Fachmann bekannt. Bevorzugt weisen die Reaktivverdünner nur eine vernetzbare Gruppe auf. Selbstverständlich können Gemische mehrerer verschiedener Reaktivverdünner eingesetzt werden.

Beispiele für geeignete Reaktivverdünner umfassen insbesondere (Meth)acrylsäureester wie (Meth)acrylsäuremethylester, (Meth)acrylsäureethylester, wie zum Beispiel 2-Hydroxyethyl(meth)acrylat, Hydroxypropyl(meth)acrylat, t-Butylcyclohexyl(meth)acrylat, Phenoxyethyl(meth)acrylat, Trimethylolpropanformalmono(meth)acrylat, Ethylenglykoldi(meth)acrylat, Isobaronylacrylat, Dipropylenglykoldiacrylat, Tripropylenglykoldiacrylat, Trimethylolpropantriacrylat, Hexandioldiacrylat, Laurylacrylat, Vinylether wie Methylvinylether, Ethylvinylether oder auch Styrol. Weitere Beispiele sind in P.K.T. Oldring (Herausgeber), Chemistry and Technology of UV & EB Formulations for Coatings, Inks and Paints, Vol. 2, Chapter 3: Reactive Diluents for UV and EB Curable Formulations, Wiley and SITA Technology, London, 1997 offenbart.

Die Menge derartiger Reaktivverdünner beträgt im Regelfalle 20 bis 90 Gew.-% bezüglich der Menge aller Komponenten der Formulierung.

### Photoinitiatoren

Die eingesetzte photochemisch vernetzbare Zubereitung umfasst weiterhin in der Regel einen oder mehrere Photoinitiatoren, welche die Polymerisation der vernetzbaren Gruppen - im Regelfall mittels radikalischer Patentanmeldung - initiieren können. Sofern die Aushärtung mittels Elektronenstrahlung erfolgt, ist deren Zusatz nicht erforderlich.

Die Initüerung der Polymerisation kann mittels energiereicher Strahlung, beispielsweise mittels UV-Strahlung, UV/VIS-Strahlung oder NIR-Strahlung erfolgen. Je nach dem gewünschten Wellenlängenbereich wählt der Fachmann einen geeigneten Photoinitiator aus. Ebenfalls können auch Gemische verschiedener Photoinitiatoren eingesetzt werden.

Geeignete Photoinitiatoren sind dem Fachmann prinzipiell bekannt, zum Beispiel solche in "Advances in polymer science", Vol. 14, Springer Verlag Berlin, 1974 oder in K.K. Dietliker, Chemistry an Technology of UV- and EB-Formulation for Coatings, Inks and Paints, Vol. 3, Photoinitiators for Free Radical and Cationic Polymerization, P.K.T. Oldring (Eds) SITA Technology Ltd, London, genannten Punkt.

Beispiele geeigneter Photoinitiatoren umfassen Mono- oder Bisalkylphosphinoxide, wie sie zum Beispiel in EP-A 57474, DE-A 196 18 720, EP-A 495 751 oder EP-A 615 980 beschrieben sind. Beispiele bevorzugter Photoinitiatoren umfassen 2,4,6-Trimethylbenzoylyphenylphosphinoxid, Ethyl-2,4,6-trimethylbenzoylphenylphosphinat, bis-(2,4,6-Trimethylbenzoyl)phenylphosphinoxid, Benzophenon, 1-Benzoylcyclohexan-1-on, 2-Hydroxy-2,2-dimethylacetophenon und 2,2-Dimethoxy-2-phenylacetophenon.

Typische Gemische umfassen beispielsweise 2-Hydroxy-2-methyl-1-phenylpropan-2-on und 1-Hydroxycyclohexylphenylketon, bis(2,6-Dimethoxybenzylol)-2,4,4-trimethylpentylphosphinoxid und 2-Hydroxy-2-methyl-1-phenylpropan-1-on, Benzophenon und 1-Hydroxycyclohexylphenylketon, bis(2,6-Dimethoxybenzoyl)-2,4,4-trimethylpentylphosphinoxid und 1-Hydroxycyclohexylphenylketon, 2,4,6-Trimethylbenzoyldiphenylphosphinoxid und 2-Hydroxy-2-methyl-1-phenylpropan-1-on, 2,4,6-Trimethylbenzophenon und 4-Methylbenzophenon oder 2,4,6-Trimethylbenzophenon und 4-Methylbenzophenon und 2,4,6-Trimethylbenzoyldiphenylphosphinoxid.

Die Menge der Photoinitiatoren ist für das erfindungsgemäße Verfahren im Regelfalle höher als bei üblichen UV-Anwendungen und wird vom Fachmann je nach der gewünschten Anwendung bestimmt, beispielsweise nach der Reaktivität der verwendeten vernetzbaren Komponenten, oder ob unter inerten Bedingungen gehärtet wird oder nicht. Sie beträgt im Regelfalle 1 bis 20 Gew.-%, bevorzugt 2 bis 18 Gew.-% und besonders bevorzugt 3 bis 15 Gew.-% bezüglich der Summe aller Komponenten der Formulierung. Sie kann auch nur 1 bis 2 Gew.-% betragen, insbesondere bei sehr reaktiven vernetzbaren Komponenten und/oder Härtung unter inerten Bedingungen.

### Atmosphärisch vernetzbare Zubereitung

Der Begriff "atmosphärisch vernetzbar" oder "atmosphärisches Vernetzen" bedeutet, dass die Bindemittelsysteme die Eigenschaft aufweisen, nach dem Aufbringen auf die Oberfläche unter üblichen Umgebungsbedingungen, das heißt etwa bei Raumtemperatur, in Gegenwart von Luft sowie üblicher Luftfeuchtigkeit ohne die Verwendung zusätzlicher Apparaturen oder Einrichtungen auszuhärten. Typische Härtungstemperaturen betragen je nach der Umgebung mehr als 0 bis 40°C, bevorzugt 5 bis 35°C und beispielsweise 15 bis 25°C. Es ist für den Fachmann klar, dass die Zeit bis zum vollständigen Härten ein und desselben Bindemittelsystems je nach den tatsächlich herrschenden Umgebungsbedingungen unterschiedlich sein kann.

Je nach der Art des eingesetzten Bindemittelsystems kann die Vernetzung beziehungsweise Härtung nach verschiedenen Mechanismen verlaufen. Beispielsweise kann es sich um eine rein physikalische Härtung, verursacht durch das Verdunsten des verwendeten Lösemittels handeln. Es kann sich weiterhin um eine oxidative Härtung durch Reaktion des Bindemittelsystems mit dem Sauerstoff der Luft handeln. Schließlich kann es sich auch um eine chemische Vernetzung (Reaktivvernetzung) handeln. Reaktive Bindemittelsysteme umfassen vernetzbare Komponenten. Die vernetzbaren Komponenten können niedermolekular, oligomer oder polymer sein. Es kann sich hierbei bevorzugt um 1 K- oder auch um 2 K-Systeme handeln. Reaktiv vernetzende Systeme umfassen auch feuchtigkeitshärtende Bindemittelsysteme, bei denen die Luftfeuchtigkeit als Härterkomponente fungiert. Selbstverständlich kann ein Bindemittelsystem auch durch eine Kombination verschiedener Härtungsverfahren aushärten. Bei 2-K-Systemen werden die Binder- und die Härterkomponente in prinzipiell bekannter Art und Weise vor dem Verwenden der Formulierung gemischt.

Zur Ausführung der Erfindung können wässrig lösliche oder organisch lösliche Bindemittelsysteme eingesetzt werden. Bevorzugt handelt es sich um Bindemittelsysteme auf wässriger Basis.

Bindemittelsysteme für Korrosionsschutzbeschichtungen, insbesondere Korrosionsschutzsysteme auf wässriger Basis sind dem Fachmann prinzipiell bekannt. Es kann sich beispielsweise um Epoxyharze, Polyacrylate, Styrol-Acrylat-Polymere, Polyester, Alkydharze, Polyurethane der Styrol-Butadien-Polymere handeln.

Die Menge der Bindemittel (A) in der Formulierung beträgt 15 bis 70 Gew. %, bezogen auf die Menge aller Komponenten der Formulierung einschließlich des Lösemittels. Sie wird vom Fachmann je nach den gewünschten Eigenschaften der Beschichtung festgelegt. Bevorzugt beträgt die Menge 20 bis 60 Gew. % und besonders bevorzugt 25 bis 50 Gew. %.

Bevorzugte Bindemittelsysteme zur Ausführung der Erfindungen sind nachfolgend beschrieben.

### Polyacrylate bzw. Styrol-Acrylat-Copolymere (A1)

In einer bevorzugten Ausführungsform der Erfindung handelt es sich bei dem Bindemittelsystem um eine wässrige oder überwiegend wässrige Dispersion von Polyacrylaten bzw. Styrol-Acrylat-Copolymeren (A1).

Wässrige Dispersionen von Polyacrylaten bzw. Styrol-Acrylat-Copolymeren_(A1) zur Herstellung von Korrosionsschutzanstrichen sind dem Fachmann prinzipiell bekannt. Bei den wässrigen Dispersionen der Polyacrylate (A1) kann es sich sowohl um Primärdispersionen wie um Sekundärdispersionen handeln. Geeignete Polyacrylate enthalten als Hauptmonomere mindestens ein Alkyl(meth)acrylat wie beispielsweise Methyl(meth)acrylat, Ethyl(meth)acrylat, Butyl(meth)acrylat oder 2-Ethylhexyl(meth)acrylat. Sie können bevorzugt als weitere Hauptmonomere Vinylaromaten, insbesondere Styrol aufweisen. Die Menge der Hauptmonomeren zusammen beträgt in der Regel mindestens 60 Gew. %, bevorzugt mindestens 80 Gew. %. Styrol-Acrylat-Copolymere umfassen neben den genannten Alkyl(meth)acrylaten als Hauptmonomer in der Regel mindestens 30 Gew. %, bevorzugt mindestens 40 Gew. % und besonders bevorzugt etwa 50 Gew. % Styrol. Die Polyacrylate bzw. Styrol-Acrylat-Copolymere (A1) können daneben noch weitere Comonomere aufweisen, insbesondere solche mit funktionellen Gruppen wie Hydroxy-, Carboxy- oder Carboxamidgeruppen. Beispiele umfassen (Meth)acrylsäure, Itaconsäure, Maleinsäure, Fumarsäure, (Meth)acrylamid oder Hydroxyalkyl(meth)acrylate. Bevorzugt handelt es sich bei weiteren Comonomeren um saure Comonomere. Weiterhin können optional auch noch vernetzenende Monomere in geringen Mengen, üblicherweise weniger als 4 Gew. %, bevorzugt weniger als 2 Gew. %, anwesend sein. Beispiele umfassen Butandiol(meth)acrylat, Hexandiol-di(meth)acrylat oder Allylacrylat.

Polyacrylate (A1) können in prinzipiell bekannter Art und Weise mittels Emulsionspolymerisation hergestellt werden. Weitere Einzelheiten zu derartigen Polymeren sowie deren Herstellung sind beispielsweise in EP-A 157 133, WO 99/46337, oder in *"*Paints and Coatings, 2.5. Acrylic Coatings" in Ullmann's Encyclopedia of Technical Chemistry, 6th Edition 2000, Electronic Release offenbart. Der Fachmann trifft unter den prinzipiell möglichen Polyacrylaten (A1) je nach den gewünschten Eigenschaften der Schicht eine geeignete Auswahl.

Zur Ausführung der Erfindung insbesondere geeignet sind Styrol-Acrylat-Copolymere, welche als Hauptmonomere mindestens ein elastomeres Acrylat wie beispielsweise n-Butyl(meth)acrylat, n-Hexyl(meth)acrylat, n-Octylacrylat oder 2-Ethylhexyl(meth)acrylat im Gemisch mit Styrol sowie als Nebenmonomer mindestens ein saures Monomer, wie beispielsweise (Meth)acrylsäure umfassen. Zur Verwendung als Bindemittel für die Formulierung können die Säuregruppen ganz oder teilweise mit geeigneten Basen wie beispielsweise Ammoniak neutralisiert werden.

Die eingesetzten Polyacrylate sollten in der Regel eine Glasübergangstemperatur T_{g} im Bereich von 0 bis 60°C, bevorzugt im Bereich von 5 bis 40°C aufweisen (gemessen nach der DSC-Methode nach DIN EN ISO 11357). Die Glasübergangstemperatur kann vom Fachmann in prinzipiell bekannter Art und Weise durch die Auswahl und das Mengenverhältnis von Hart- und Weichmonomeren gewählt werden.

Bevorzugt zur Ausführung der Erfindung können weiterhin Polyacrylate (A1) mit einer mittleren Teilchengröße von 50 nm bis 400 nm, besonders bevorzugt 80 nm bis 250 nm eingesetzt werden (gemessen mit dem Malvern^{®} Autosizer 2 C).

Geeignete Acrylat- bzw. Styrol-Acrylat-Dispersionen zur Herstellung von Korrosionsschutzanstrichen sind kommerziell erhältlich, beispielsweise als Acronal^{®} S 760 oder Acronal^{®} LR 8977 (Fa. BASF Aktiengesellschaft) oder Acronal^{®} Optive 410 (Fa. BASF Corporation).

### Styrol-Alkadien-Polymere (A2)

In einer zweiten, bevorzugten Ausführungsform der Erfindung handelt es sich bei dem Bindemittelsystem um eine wässrige oder überwiegend wässrige Dispersion von Styrol-Alkadien-Polymeren (A2).

Wässrige Dispersionen von Styrol-Alkadien-Polymeren (A2) zur Herstellung von Korrosionsschutzanstrichen sind dem Fachmann prinzipiell bekannt und beispielsweise in EP-A 47380 beschrieben. Es kann es bevorzugt um Primärdispersionen aber auch um Sekundärdispersionen handeln.

Geeignete Polymere (A2) umfassen als Hauptmonomere Styrol sowie mindestens ein konjugiertes aliphatisches Dien (Alkadien). Bei den Alkadienen kann es sich beispielsweise um Butadien, Isopren, 1,3-Pentadien oder Dimethylbutadien handeln. Das Styrol kann auch noch mit Alkylgruppen substituiert sein. Beispiele umfassen α-Methylstyrol oder 4-Methylstyrol. Bevorzugt handelt es sich bei den Hauptmonomeren um Styrol und Butadien. In der Regel enthalten die Polymere zumindest 20 Gew.-% Styrol und 20 Gew.-% Alkadiene, wobei die Menge der Hauptmonomere zusammen in der Regel mindestens 60 Gew. %, bevorzugt mindestens 80 Gew. % beträgt. Die Mengenangaben beziehen sich jeweils auf die Summe aller Monomere. Sie können darüber hinaus noch weitere Comonomere aufweisen. Zu nennen sind hier einerseits ethylenisch ungesättigte Karbonsäuren und/oder Dicarbonsäuren wie beispielsweise (Meth)acrylsäure, Maleinsäure oder Itaconsäure. Weiterhin kann es sich um ethylenisch ungesättigte Carbonsäurenitrile wie (Meth)acrylnitril sowie Alkyl(meth)acrylate wie Methyl(meth)acrylat, n-Butyl(meth)acrylat, n-Hexyl(meth)acrylat, n-Octylacrylat oder 2-Ethylhexyl(meth)acrylat handeln.

Styrol-Alkadien-Polymere (A2) können in prinzipiell bekannter Art und Weise mittels Emulsionspolymerisation hergestellt werden. Weitere Einzelheiten zu Styrol-Butadien-Polymeren für Beschichtungsstoffe sowie deren Herstellung sind beispielsweise in *"*Paints and Coatings, 2.4.8. Polystyrene and Styrene Copolymers" in Ullmann's Encyclopedia of Technical Chemistry, 6th Edition 2000, Electronic Release offenbart.

Zur Ausführung der Erfindung insbesondere geeignet sind Styrol-Butadien-Polymere, welche als Nebenmonomer ein oder mehrere saure Monomere, wie beispielsweise (Meth)acrylsäure umfassen, bevorzugt in einer Menge von 0,5 bis 5 Gew. %. Zur Verwendung als Bindemittel für die Formulierung können die Säuregruppen bevorzugt ganz oder teilweise mit geeigneten Basen wie beispielsweise Ammoniak neutralisiert werden.

Die eingesetzten Styrol-Butadien-Polymere (A2) sollten in der Regel eine Glasübergangstemperatur T_{g} im Bereich von 0 bis 60°C, bevorzugt im Bereich von 5 bis 40°C aufweisen. Die Glasübergangstemperatur kann vom Fachmann in prinzipiell bekannter Art und Weise durch die Auswahl und das Mengenverhältnis von Hart- und Weichmonomeren gewählt werden.

Bevorzugt zur Ausführung der Erfindung können weiterhin Styrol-Butadien-Polymere (A2) mit einer mittleren Teilchengröße von 50 nm bis 400 nm, besonders bevorzugt 80 nm bis 250 nm eingesetzt werden (wie oben gemessen).

### Polyurethane (A3)

In einer dritten, bevorzugten Ausführungsform der Erfindung handelt es sich bei dem Bindemittelsystem um eine wässrige oder überwiegend wässrige Dispersion von Polyurethanen (A3).

Wässrige Dispersionen von Polyurethanen (A3) zur Herstellung von Korrosionsschutzanstrichen sind dem Fachmann prinzipiell bekannt. Einzelheiten zu Polyurethanen für Beschichtungsstoffe sowie deren Herstellung sind beispielsweise in "Paints and Coatings, 2.9 Polyurethane Coatings in "Ullmann's Encyclopedia of Technical Chemistry, 6th Edition 2000, Electronic Release offenbart. Bei den wässrigen Dispersionen der Polyurethanen (A3) kann es sich sowohl um Primärdispersionen wie um Sekundärdispersionen handeln.

Polyurethane für wässrige Dispersionen können in prinzipiell bekannter Art und Weise aus üblichen Diisocyanaten sowie Diolen aufgebaut werden. Im Hinblick auf gute Filmbildung und Elastizität kommen hierzu insbesondere Diole mit einem zahlenmittleren Molekulargewicht Mₙ von etwa 500 bis 5000 g/mol, bevorzugt etwa 1000 bis 3000 g/mol in Frage. Hierzu können sowohl Polyether- wie Polyesterdiole eingesetzt werden. Die Menge derartiger Diole mit höherem Molekulargewicht beträgt üblicherweise 10 bis 100 mol % bezüglich der Summe aller Diole. Die gewünschte Härte und Elastizität des Films lässt sich steuern, indem man neben dem bereits genannten Diol noch niedermolekulare Diole mit einem zahlenmittleren Molekulargewicht Mₙ von etwa 60 bis 500 g/mol einsetzt.

Zum Aufbau von Polyurethanen für wässrige Dispersionen werden darüber hinaus Monomere eingesetzt, welche wenigstens eine Isocyanatgruppe oder eine gegenüber Isocyanatgruppen reaktive Gruppe sowie zusätzlich mindestens eine hydrophile Gruppe umfassen. Hierbei kann es sich um nichtionische Gruppen wie beispielsweise Polyoxcyethylengruppen, um saure Gruppen wie COOH-, Sulfonat- oder Phosphonatgruppen oder um basische Gruppen wie Aminogruppen handeln. Bevorzugt handelt es sich um saure Gruppen. Zur Verwendung als Bindemittel für die Formulierung können die Säuregruppen bevorzugt ganz oder teilweise mit geeigneten Basen neutralisiert werden. Bevorzugt hierzu sind Ammoniak oder Amine. Weitere Einzelheiten zu derartigen Polyurethandispersionen sowie deren Herstellung sind in WO 2005/005565, Seite 4, Zeile 13 bis Seite 14, Zeile 14 ausführlich beschrieben. Weitere Beispiele geeigneter Polyurethane sind in US 5,707,941 oder in WO 2004/101638, insbesondere Seite 2, Zeile 31 bis Seite14, Zeile 11 offenbart.

Es kann sich auch um modifizierte Polyurethane handeln. Beispielsweise kann es sich um oxidativ härtende Urethanalkyde handeln. Zur Herstellung können beispielsweise Triglyceride ungesättigter Fettsäuren teilweise hydrolysiert werden. Die entstehende OH-Gruppe kann bei der Polyurethanherstellung mit den Isocyanatgruppen reagieren.

Bevorzugt zur Ausführung der Erfindung können weiterhin Polyurethane (A3) mit einer mittleren Teilchengröße von nicht mehr als 1000 nm, bevorzugt weniger als 500, besonders bevorzugt weniger als 200 nm, und insbesondere 20 bis 200 nm eingesetzt werden.

### Alkydharze (A4)

In einer vierten, bevorzugten Ausführungsform der Erfindung handelt es sich bei dem Bindemittelsystem um eine wässrige oder überwiegend wässrige Dispersion von Alkydharzen (A4).

Wässrige Dispersionen von Alkydharzen (A4) zur Herstellung von Korrosionsschutzanstrichen sind dem Fachmann prinzipiell bekannt. Bei Alkydharzen (A4) handelt es sich um oxidativ härtende Polykondensationsharze aus Polyolen und mehrwertigen Carbonsäuren, bei denen mindestens eine OH-Gruppe des Polyols mit fetten Ölen und/oder natürlichen und/oder synthetischen einfach oder mehrfach ungesättigten Fettsäuren verestert ist, wobei mindestens eines der eingesetzten Polyole tri- oder höherfunktionell sein muss.

Beispiele bevorzugter mehrwertiger Alkohole umfassen Glycerin, Pentaerythrit, Trimethylolethan, Trimethylolpropan, verschiedene Diole wie Ethan-/Propandiol, Diethylenglykol, Neopentylglykol.

Bevorzugte mehrwertige Carbonsäuren sind Phthalsäure(anhydrid) (PSA), Isophthalsäure, Terephthalsäure, Trimellitsäureanhydrid, Adipinsäure, Azelainsäure, Sebacinsäure, besonders bevorzugt ist Phthalsäure(anhydrid).

Als Ölkomponente bzw. Fettsäure kommen beispielsweise trocknende Öle, wie Leinöl, Oiticicaöl oder Holzöl, halbtrocknende Öle, wie Sojaöl, Sonnenblumenöl, Safloröl, Ricinenöl oder Tallöl, nicht-trocknende Öle, wie Rizinusöl, Kokosöl oder Erdnussöl oder freie Fettsäuren obiger Öle in Betracht.

Die Molmasse Mₙ typischer Alkydharze liegt zwischen 1500 und 20000 g/mol, bevorzugt zwischen 3500 und 6000 g/mol. Die Säurezahl beträgt bevorzugt 2 bis 30 mg KOH/g, bei wasserverdünnbaren Harzen auch 35-65 mg KOH/g. Die OH-Zahl beträgt in der Regel bis zu 300, bevorzugt bis zu 100 mg KOH/g.

Der Begriff "Alkydharze" soll auch modifizierte Alkydharze wie styrolmodifizierte Alkydharze, Urethanalkyde, Urethanöle oder epoxyharzmodifizierte Alkydharze umfassen. Derartige modifizierte Alkydharze sind dem Fachmann bekannt.

Weitere Einzelheiten zu Alkydharzen (A4) für Beschichtungsstoffe sowie deren Herstellung sind beispielsweise in *"*Paints and Coatings, 2.6. Alkyd Coatings" in Ullmann's Encyclopedia of Technical Chemistry, 6th Edition 2000, Electronic Release sowie in *"*Lackformulierung und Lackrezeptur", Hrsg. Ulrich Zorll, S. 188 ff, Curt R. Vinzentz Verl., Hannover, 2003 offenbart.

Die eingesetzten Alkydharze (A4) sollten in der Regel eine Glasübergangstemperatur T_{g} im Bereich von 0 bis 60°C, bevorzugt von 5 bis 40°C aufweisen.

Die erfindungsgemäß eingesetzte Zubereitung umfasst 20 bis 70 Gew.-% des vernetzbaren Bindemittelsystems (A). Die Mengenangaben beziehen sich auf die Summe aller Komponenten der Zubereitung mit Ausnahme des Lösungsmittels oder des Lösungsmittelgemisches. Bevorzugt beträgt die Menge des Bindemittelsystems (A) 30 bis 60 Gew.-% und besonders bevorzugt 40 bis 50 Gew.-%.

Die für das erfindungsgemäße Verfahren eingesetzte Zubereitung umfasst weiterhin mindestens eine Komponente ausgewählt aus der Gruppe von anorganischen Füllstoffen, Pigmenten oder Farbstoffen (B). Der Füllstoff kann auch eine zusätzliche organische Beschichtung, beispielsweise zur Hydrophobierung oder Hydrophilierung des Füllstoffes umfassen. Der Füllstoff weist eine durchschnittliche Partikelgröße von weniger als 10 µm auf, bevorzugt beträgt die durchschnittliche Partikelgröße 10 nm bis 9 µm und besonders bevorzugt 100 nm bis 5 µm. Bei runden oder annähernd runden Partikeln bezieht sich diese Angabe auf den Durchmesser, bei unregelmäßig geformten wie beispielsweise bei nadelförmigen Partikeln auf die Längsachse. Mit der Partikelgröße ist die Primärpartikelgröße gemeint. Dem Fachmann ist offensichtlich, dass sich insbesondere feinteilige Feststoffe häufig zu größeren Partikeln agglomerieren, die zur Verwendung in der Formulierung zur Herstellung der erfindungsgemäßen integrierten Vorbehandlungsschicht intensiv dispergiert werden müssen. Die Partikelgröße wird vom Fachmann je nach den gewünschten Eigenschaften der Schicht gewählt, sie richtet sich insbesondere auch nach der gewünschten Schichtdicke.

Als Füllstoffe kommen ebenfalls elektrisch leitfähige Pigmente in Frage. Derartige Zusätze dienen der Verbesserung der Schweißbarkeit und der Verbesserung einer nachfolgenden Beschichtung mit Elektrotauchlacken. Beispiele geeigneter elektrisch leitender Füllstoffe beziehungsweise Pigmente umfassen Phosphide, Vanadiumcarbid, Titannitrit, Molybdänsulfit, Graphit, Ruß oder dotiertes Bariumsulfat. Bevorzugt werden Metallphosphide von Zn, Al, Si, Mn, Cr, Fe oder Ni eingesetzt, insbesondere Eisenphosphide eingesetzt. Beispiele bevorzugter Metallphosphide umfassen CrP, MnP, Fe₃P, Fe₂P, Ni₂P, NiP₂ oder NiP₃.

Es können auch nicht-leitende Pigmente als Füllstoffe eingesetzt werden, wie beispielsweise amorphe Silicium-, Aluminium- oder Titanoxide, die auch noch mit weiteren Elementen dotiert sein können. Beispielsweise kann mit Calciumionen modifiziertes amorphes Siliciumdioxid eingesetzt werden. Weitere Beispiele von Pigmenten umfassen Korrosionsschutzpigmente wie Zinkphosphat, Zinkmetaborat oder Bariummetaborat-Monohydrat.

Bei den Pigmenten kann es sich insbesondere um Korrosionsschutzpigmente handeln. Es kann sich sowohl um aktive wie um passive Korrosionsschutzpigmente handeln.

Beispiele von aktiven Korrosionsschutzpigmenten umfassen insbesondere Phosphate, phosphathaltige oder modifizierte Phosphate wie Pigmente auf Basis von Zinkphosphat, Zinkaluminiumorthophosphat, Zink-Molybdän-Orthophosphat, Zink-Aluminium-Molybdän-Orthophosphat, Calciumhydrogenphosphat, Zink-Calcium-Strontium Orthophosphat-Silicat, Zink-Aluminium-Polyphosphat, Strontium-Aluminium-Polyphosphat, Zink-Calcium-Aluminium-Strontium-Orthophosphat-Polyphosphat-Silikat, Calcium-Aluminium-Polyphosphat-Silikat. Weitere Beispiele umfassen Kombinationen anorganischer Phosphate mit schwerlöslichen, elektrochemisch aktiven organischen Korrosionsinhibitoren wie mit Zn- oder Ca-Salzen von 5-Nitroisophthalsäure modifiziertes Zinkphosphat. Weiterhin können auch Eisenphosphid, Zinkhydroxyphosphid, Borosilikat-Pigmente wie Bariummetaborat oder Zinkborophosphate, Molybdate wie Zinkmolybdat, Natriumzinkmolybdate oder Calciummolybdat, Pigmente mit ionenaustauschenden Eigenschaften wie mit Calcium-lonen modifiziertes amorphes SiO₂ oder entsprechend modifizierte Silikate, Metalloxide wie beispielsweise ZnO oder auch Metallpulver wie beispielsweise Zinkstaub eingesetzt werden. Selbstverständlich können auch typische organische Korrosionsschutzpigmente wie bspw. Zn- oder Ca-Salze von 5-Nitroisophthalsäure eingesetzt werden.

Passive Korrosionsschutzpigmente verlängern die Diffusionswege für korrosiv wirkende Komponenten und erhöhen dadurch die Korrosionsbeständigkeit. Beispiele umfassen vor allem plättchenförmige oder lamellenförmige Pigmente wie Glimmer, Hämatit, Schichtsilikate, lineare Polysilikate wie beispielsweise Wollastonit, Talk oder Metallplättchen wie Aluminium- oder Eisenplättchen.

Weitere Einzelheiten zu Korrosionsschutzpigmenten sind beispielsweise in *"*Pigments, 4.2 Anticorrosive Pigments" in Ullmann's Encyclopedia of Technical Chemistry, 6th Edition 2000, Electronic Release.

Bei den Pigmenten kann es sich auch um typische Farb- und/oder Effektpigment handeln.

Unter Effektpigmenten sind alle Pigmente zu verstehen, die einen plättchenförmigen Aufbau zeigen und einer Obertlächenbeschichtung spezielle dekorative Farbeffekte verleihen. Effektpigmente sind dem Fachmann bekannt. Beispiele umfassen reine Metallpigmente, wie z.B. Aluminium-, Eisen- oder Kupferpigmente, Interferenzpigmente, wie z.B. titandioxidbeschichteter Glimmer, eisenoxidbeschichteter Glimmer, Mischoxidbeschichteter Glimmer (z.B. mit Titandioxid und Fe₂O₃), metalloxidbeschichtetes Aluminium, oder Flüssigkristallpigmente.

Bei Farbpigmenten handelt es sich insbesondere um übliche in der Lackindustrie einsetzbare organische oder anorganische Absorptionspigmente. Beispiele für organische Absorptionspigmente sind Azopigmente, Phthalocyanin-, Chinacridon- und Pyrrolopyrrolpigmente. Beispiele für anorganische Absorptionspigmente sind Eisenoxidpigmente, Titandioxid und Ruß.

Beispiele für Farbstoffe sind Azo-, Azin-, Anthrachinon-, Acridin-, Cyanin-, Oxazin-, Polymethin-, Thiazin-, Triarylmethan-Farbstoffe. Diese Farbstoffe können Anwendung finden als basische oder kationische Farbstoffe, Beizen-, Direkt-, Dispersions-, Entwicklungs-, Küpen-, Metallkomplex-, Reaktiv-, Säure-, Schwefel-, Kupplungs- oder substantive Farbstoffe.

Mit Füllstoffen lassen sich die Eigenschaften der Beschichtung, wie beispielsweise Härte, Rheologie oder die Orientierung der Effektpigmente beeinflussen. Füllstoffe sind häufig coloristisch unwirksam; d.h. sie weisen eine geringe Eigenabsorption auf und die Brechzahl ist ähnlich der Brechzahl des Beschichtungsmediums. Beispiele für Füllstoffe umfassen Talkum, Calciumcarbonat, Kaolin, Bariumsulfat, Magnesiumsilikat, Aluminiumsilikat, kristallines Siliziumdioxid, amorphe Kieselsäure, Aluminiumoxid, Mikrokugeln oder Mikrohohlkugeln z.B. aus Glas, Keramik oder Polymeren mit Größen von beispielsweise 0,1-10 µm. Weiterhin können als Füllstoffe beliebige feste inerte organische Partikel, wie z.B. Harnstoff-Formaldehyd-Kondensationsprodukte, mikronisiertes Polyolefinwachs oder mikronisiertes Amidwachs, eingesetzt werden. Die inerten Füllstoffe können jeweils auch in Mischung eingesetzt werden. Bevorzugt wird jedoch jeweils nur ein Füllstoff eingesetzt.

Gemäß einer weiteren Ausführungsform der Erfindung können auch Gemische verschiedener Pigmente eingesetzt werden. Die Pigmente werden in einer Menge von 20 bis 70 Gew.-% eingesetzt. Die genaue Menge wird vom Fachmann je nach den gewünschten Eigenschaften der Schicht festgelegt. Bei Verwendung von Leitfähigkeitspigmenten sind die eingesetzten Mengen üblicherweise größer als bei Verwendung nicht-leitender Füllstoffe. Bevorzugte Mengen bei leitfähigen Pigmenten und Füllstoffen betragen 40 bis 70 Gew.-%, bevorzugte Mengen bei nicht leitfähigen Pigmenten 20 bis 50 Gew.-%.

Die Art und Menge von Komponenten (B) werden vom Fachmann je nach dem Verwendungszweck der Schicht bestimmt. In einer besonders bevorzugten Ausführungsform der Erfindung werden keine chromhaltigen Komponenten (B) eingesetzt. Selbstverständlich können auch Gemische verschiedener Komponenten (B) eingesetzt werden.

Zum Grundierung vorgesehene Zubereitungen werden üblicherweise höher pigmentiert als zur Zwischen- oder Deckbeschichtung vorgesehene Zubereitungen.

Zur Grundierung vorgesehene Zubereitungen umfassen üblicherweise mindestens ein aktives Korrosionsschutzpigment, für Zwischenbeschichtungen vorgesehen Zubereitungen mindestens ein passives Korrosionsschutzpigment und Zubereitungen für Deckbeschichtungen mindestens ein Farbpigment und/oder einen Farbstoff.

In einer besonders bevorzugten Ausführungsform umfassen zur Grundierung vorgesehene Zubereitungen mindestens ein aktives Korrosionschutzpigment, mindestens einen Füllstoff sowie bevorzugt weiterhin mindestens ein Farbpigment.

Als Komponente (D) umfasst die Zubereitung, falls notwendig, ein geeignetes Lösungsmittel, in dem die Komponenten gelöst und/oder dispergiert sind, um einen gleichmäßigen Auftrag der Zubereitung auf die Oberfläche zu ermöglichen. Die Lösemittel werden üblicherweise vor dem Härten der Beschichtung entfernt. Es ist aber auch prinzipiell möglich, die Zubereitung lösungsmittelfrei oder im Wesentlichen lösungsmittelfrei auszugestalten. Hierbei kann es sich beispielsweise um Pulverlacke oder um photochemisch härtbare Zubereitungen handeln.

Geeignete Lösungsmittel sind solche, die in der Lage sind, die erfindungsgemäßen Verbindungen zu lösen, zu dispergieren, zu suspendieren oder zu emulgieren. Es kann sich dabei um organische Lösungsmittel oder um Wasser handeln. Selbstverständlich können auch Gemische verschiedener organischer Lösungsmittel oder Gemische organischer Lösungsmittel mit Wasser eingesetzt werden. Der Fachmann trifft unter den Lösungsmitteln je nach dem gewünschten Verwendungszweck und nach der Art der eingesetzten erfindungsgemäßen Verbindungen eine Auswahl.

Beispiele organischer Lösungsmittel umfassen Kohlenwasserstoffe wie Toluol, Xylol oder Gemische, wie sie bei der Raffination von Rohöl erhalten werden, wie beispielsweise Kohlenwasserstofffraktion bestimmter Siedebereiche, Ether wie THF oder Polyether wie Polyethylenglykol, Etheralkohole wie Butylglykol, Etherglykolacetate wie Butylglykolacetat, Ketone wie Aceton, Alkohole wir Methanol, Ethanol oder Propanol.

Weiterhin können auch Zubereitungen eingesetzt werden, die Wasser oder ein überwiegend wässriges Lösungsmittelgemisch umfassen. Darunter sollen solche Gemische verstanden werden, die zumindest 50 Gew.-%, bevorzugt mindestens 65 Gew.-% und besonders bevorzugt mindestens 80 Gew.-% Wasser umfassen. Weitere Komponenten sind mit Wasser mischbare Lösungsmittel. Beispiele hierfür umfassen Monoalkohole wie Methanol, Ethanol oder Propanol, höhere Alkohole wie Ethylenglykol oder Polyetherpropylole und Etheralkohole wie Butylglykol oder Methoxypropanol.

Bei weiteren Komponenten überwiegend wässriger Lösemittelgemische kann es sich um mit Wasser mischbare Lösungsmittel handeln. Beispiele umfassen insbesondere typische Co-Lösemittel wie n-Butanol, Butylglykol, Butyldiglykol, N-Methyl-2-pyrrolidon oder N-Ethyl-2-pyrrolidon. Bei weiteren Komponenten kann es sich aber auch um mit Wasser nicht mischbare Lösemittel handeln. Derartige Lösemittel werden häufig als Filmbildehilfsmittel eingesetzt. Beispiele umfassen Butylglykolacetat, Butylglykoldiacetat oder 2,2,4-Trimethyl-1,3-pentandiol-1-isobutyrat (Texanol^{®}).

Die Menge der Lösungsmittel wird vom Fachmann je nach den gewünschten Eigenschaften der Zubereitung und der gewünschten Applikationsmethode gewählt. Im Regelfalle beträgt das Gewichtsverhältnis der Schichtkomponenten zu dem Lösungsmittel 10 : 1 bis 1 : 10, bevorzugt ca. 2 : 1, ohne dass die Erfindung hierauf beschränkt sein soll. Es ist selbstverständlich auch möglich, zunächst ein Konzentrat herzustellen und erst vor Ort auf die gewünschte Konzentration zu verdünnen.

Über die Komponenten (A) bis (C) sowie optional (D) kann die Zubereitung darüber hinaus auch einen oder mehrere Hilfsstoffe und/oder Additive (E) umfassen. Derartige Hilfsstoffe und/oder Additive dienen zur Feinsteuerung der Eigenschaften der Schicht. Ihre Menge übersteigt im Regelfalle nicht 20 Gew.-% bezüglich der Summe aller Komponenten mit Ausnahme der Lösungsmittel, bevorzugt nicht 10 Gew.-%.

Beispiele geeigneter Zusatzstoffe (E) sind Farb- und/oder effektgebende Pigmente, Rheologiehilfsmittel, UV-Absorber, Lichtschutzmittel, Radikalfänger, Initiatoren für die radikalische Polymerisation, Katalysatoren für die thermische Vernetzung, Photoinitiatoren und -coinitiatoren, Slipadditive, Polymerisationsinhibitoren, Entschäumer, Emulgatoren, Entgasungsmittel, Netz- und Dispergiermittel, Haftvermittler, Verlaufsmittel, filmbildende Hilfsmittel, rheologiesteuernde Additive (Verdicker), Flammschutzmittel, Sikkative Hautverhinderungsmittel, sonstige Korrosionsinhibitoren, Wachse und Mattierungsmittel, wie sie aus dem Lehrbuch "Lackadditive" von John Biedemann, Whiley-VCH, Weinheim, New York, 1998, oder der deutschen Patentanmeldung DE 199 14 896 A1, Spalte 13, Zeile 56 bis Spalte 15, Zeile 54 bekannt sind. Die vorstehend genannten Seiten der Literaturstelle sind durch Bezugnahme in die vorliegende Anmeldung eingeschlossen.

Zur Ausführung des erfindungsgemäßen Verfahrens wird die Zubereitung auf die metallische Oberfläche des Substrates aufgebracht.

Optional ist es möglich, die Oberfläche vor der Behandlung zu reinigen. Erfolgt die erfindungsgemäße Behandlung unmittelbar nach einer metallischen Oberflächenbehandlung, beispielsweise einer elektrolytischen Verzinkung oder einer Schmelztauchverzinkung von Stahlbändern, so kann die erfindungsgemäße Behandlungslösung unmittelbar und ohne vorherige Reinigung auf die metallischen Oberflächen, insbesondere die auf die Oberfläche des Metallbandes aufgebracht werden. Wurden die zu behandelnden Metallbänder vor der erfindungsgemäßen Beschichtung jedoch gelagert und/oder transportiert, so sind diese in der Regel mit Korrosionsschutzöl versehen oder beispielsweise mit Flugrost verschmutzt, so dass eine Reinigung vor der erfindungsgemäßen Beschichtung erforderlich ist. Die Reinigung kann nach dem Fachmann bekannten Methoden unter Verwendung üblicher Reinigungsmittel erfolgen.

Das Aufbringen der Zubereitung kann beispielsweise durch Sprühen, Tauchen, Gießen oder Aufwalzen erfolgen. Nach einem Tauchprozess kann man zum Entfernen überschüssiger Zubereitung das Werkstück abtropfen lassen; bei Blechen, Metallfolien oder dergleichen lässt sich überschüssige Zubereitung auch abquetschen oder abrakeln.

Das Aufbringen der Zubereitung erfolgt im Regelfall bei Raumtemperatur, ohne dass damit höhere Temperaturen prinzipiell ausgeschlossen werden sollen.

Bevorzugt werden mittels des erfindungsgemäßen Verfahrens Metallbänder beschichtet (häufig als "Coil-Coating") bezeichnet. Hierbei kann die Beschichtung sowohl einseitig als auch beidseitig vorgenommen werden. Es ist ebenfalls möglich, die Ober- und Unterseite mittels verschiedener Formulierungen zu beschichten.

Ganz besonders bevorzugt erfolgt die Bandbeschichtung mittels eines kontinuierlichen Verfahrens. Kontinuierlich arbeitende Beschichtungsanlagen sind prinzipiell bekannt. Diese umfassen in der Regel mindestens eine Beschichtungsstation, eine Trockenbeziehungsweise Einbrennstation und/oder UV-Station sowie gegebenenfalls weitere Stationen zur Vor- oder Nachbehandlung, wie beispielsweise Spül- oder Nachspülstation. Beispiele für derartige Bandbeschichtungsanlagen finden sich in Römpp Lexikon Lacke und Druckfarben, Georg Thieme Verlag, Stuttgart, New York, 1998, Seite 55 "Bandbeschichtung" oder in der deutschen Patentanmeldung DE 196 32 426 A1. Selbstverständlich können zum Ausführen des Verfahrens auch andersartig konstruierte Anlagen eingesetzt werden.

Die Geschwindigkeit des Metallbandes wird vom Fachmann entsprechend in Applikations- und Härtungseigenschaften der eingesetzten Zubereitung ausgewählt. In der Regel bewährt haben sich Geschwindigkeiten von 10 bis 200 m/min, bevorzugt 12 bis 120 m/min, besonders bevorzugt 14 bis 100 m/min, ganz besonders bevorzugt 16 bis 80 und insbesondere 20 bis 70 m/min.

Zum Aufbringen auf das Metallband kann die erfindungsgemäß eingesetzte vernetzbare Zubereitung aufgesprüht, aufgegossen oder bevorzugt aufgewalzt werden. Beim bevorzugten Walzlackieren taucht die sich drehende Aufnahmewalze (Pick-up-Walze) in einen Vorrat der erfindungsgemäß eingesetzten Zubereitung ein und übernimmt so die zu applizierende Zubereitung. Diese wird von der Aufnahmewalze direkt oder über mindestens eine Übertragungswalze auf die sich drehende Applikationswalze übertragen. Von dieser aus wird der Lack durch gleichgerichtetes oder gegenläufiges Abstreifen auf das Band übertragen. Erfindungsgemäß ist das gegenläufige Abstreifen oder das Reverse-Roller-Coating-Verfahren von Vorteil und wird bevorzugt angewandt. Vorzugsweise hat die Applikationswalze eine Umlaufgeschwindigkeit, die 110 bis 125 % der Bandgeschwindigkeit beträgt, und die Aufnahmewalze eine Umlaufgeschwindigkeit, die 20 bis 40 % der Bandgeschwindigkeit beträgt. Die erfindungsgemäß eingesetzte Zubereitung kann aber auch direkt in einen Spalt zwischen zwei Walzen gepumpt werden, was von der Fachwelt als Nip-Feed bezeichnet wird.

Im Anschluss an das Aufbringen der erfindungsgemäß eingesetzten Zubereitung wird eventuell in der Schicht vorhandenes Lösungsmittel entfernt und die Schicht vernetzt. Dies kann gleichzeitig oder auch in zwei separaten Schritten erfolgen. Zum Entfernen des Lösungsmittels wird die Schicht vorzugsweise mittels einer geeigneten Vorrichtung erwärmt. Das Trocknen kann auch durch Inkontaktbringen mit einem Gasstrom erfolgen. Ebenfalls können beide Methoden kombiniert werden.

Die Aushärtemethode richtet sich nach der Natur des eingesetzten Bindemittelsystems. Sie kann thermisch und/oder photochemisch und/oder unter atmosphärischen Bedingungen erfolgen.

Bei thermischen Vernetzern wird die aufgebrachte Beschichtung erwärmt. Dies kann vorzugsweise durch Konvektionsübertragung, Bestrahlen mit nahem oder fernem Infrarot und/oder bei Bändern auf der Basis von Eisen durch elektronische Induktion erfolgen.

Die zum Aushärten erforderliche Temperatur richtet sich insbesondere nach dem eingesetzten vernetzbaren Bindemittelsystem. Sehr reaktive Bindemittelsysteme können bei niedrigen Temperaturen ausgehärtet werden als weniger reaktive Bindemittelsysteme. In aller Regel wird die Vernetzung bei Temperaturen von mindestens 60°C, bevorzugt mindestens 80°C, besonders bevorzugt von mindestens 100°C und am meisten bevorzugt von mindestens 120°C vorgenommen. Insbesondere kann die Vernetzung bei 100 bis 250°C, bevorzugt 120 bis 220°C und besonders bevorzugt bei 150 bis 200°C vorgenommen werden.

Gemeint ist jeweils die auf dem Metall gefundene Spitzentemperatur (*peak metal temperature* (PMT)), die beispielsweise mit Hilfe berührungsloser Infrarotmessung oder Bestimmung der Temperatur mit aufgeklebten Teststreifen gemessen werden kann.

Die Aufheizzeit, d.h. die Zeitdauer der thermischen Härtung variiert in Abhängigkeit von dem erfindungsgemäß eingesetzten Lack. Vorzugsweise liegt diese bei 10 Sekunden bis 2 Minuten. Wird im Wesentlichen die Konvektionswärmeübertragung angewandt, so werden bei den bevorzugten Bandlaufgeschwindigkeiten Umluftöfen mit einer Länge von 30 bis 50, insbesondere 35 bis 45 m benötigt. Die Umlufttemperatur liegt naturgemäß höher als die Temperatur der Schicht und kann bis zu 350°C betragen.

Das photochemische Aushärten erfolgt mittels aktinischer Strahlung. Unter aktinischer Strahlung wird hier und im Folgenden elektromagnetische Strahlung, wie nahes Infrarot, sichtbares Licht, UV-Strahlung oder Röntgenstrahlung oder Korpuskullarstrahlung, wie Elektronenstrahlung verstanden. Bevorzugt wird zum photochemischen Aushärten UV/VIS-Strahlung eingesetzt. Gemäß der Erfindung wird eine photochemische Aushärtung bei einer Leistung von 40 bis 250 W/cm, bevorzugt bei einer Leistung von 50 bis 200 W/cm, besonders bevorzugt bei einer Leistung von 110 bis 70 W/cm durchgeführt. Die Bestrahlung kann gegebenenfalls auch unter Ausschluss von Sauerstoff, zum Beispiel unter Inertgasatmosphäre durchgeführt werden. Das photochemische Aushärten kann unter normalen Temperaturbedingungen, d.h. ohne Erhitzung der Beschichtung erfolgen, es kann jedoch auch bei erhöhten Temperaturen, zum Beispiel bei 40 bis 150°C, vorzugsweise bei 40 bis 130°C und insbesondere bei 40 bis 100°C photochemisch vernetzt werden.

Durch das erfindungsgemäße Verfahren ist eine integrierte Vorbehandlungsschicht auf einer metallischen Oberfläche, insbesondere der Oberfläche von Eisen, Stahl, Zink oder Zinklegierungen, Aluminium oder Aluminiumlegierungen erhältlich. Dies umfasst neben dem vernetzten Bindemittelsystem (A) die Füllstoffe, die Copolymere (C) sowie optional weitere Komponenten. Daneben können auch noch aus der Metalloberfläche herausgelöste und wieder abgeschiedene Komponenten, wie übliche amorphe Oxide des Aluminiums oder Zinks sowie gegebenenfalls weitere Metalle vorhanden sein.

Die Dicke der integrierten Vorbehandlungsschicht bei der Verwendung thermisch und/oder photochemisch vernetzbarer Bindemittelsysteme beträgt 1 bis 25 µm und wird je nach den gewünschten Eigenschaften und dem Einsatzzweck der Schicht festgelegt. Im Regelfall hat sich für integrierte Vorbehandlungsschichten eine Dicke von 3 bis 15 µm bewährt. Bevorzugt ist eine Dicke von 4 bis 10 µm und besonders bevorzugt sind 5 bis 8 µm. Die Dicke ergibt sich aus der Menge der jeweils aufgebrachten Zusammensetzung. Die Dicke der integrierten Vorbehandlungsschicht bei der Verwendung atmosphärisch vernetzbarer Bindemittelsysteme beträgt mindestens 15 µm, bevorzugt mindestens 60 µm.

Bei Anwendungen im Automobilbereich kann nach dem Aufbringen der erfindungsgemäßen integrierten Vorbehandlungsschicht unter Umständen sogar auf eine kathodische Tauchlackierung (KTL) verzichtet werden. Falls die integrierte Vorbehandlungsschicht auch noch die KTL ersetzen soll, empfehlen sich etwas dickere integrierte Vorbehandlungsschichten, beispielsweise mit einer Dicke von 10 bis 25 µm, bevorzugt von 12 bis 25 µm.

Auf die mit einer integrierten Vorbehandlungsschicht versehene metallische Oberfläche können auch weitere Lackschichten aufgebracht werden. Art und Anzahl der erforderlichen Lackschichten werden vom Fachmann je nach der gewünschten Verwendung des beschichteten Metalls beziehungsweise metallischen Formteils bestimmt. Die erfindungsgemäßen integrierten Vorbehandlungsschichten lassen sich gut überlackieren und haben eine gute Haftung mit den nachfolgenden Lackschichten. Bei weiteren Lackschichten kann es sich beispielsweise um Schichten aus Farblacken, Klarlacken oder Funktionslacken handeln. Ein Beispiel für einen Funktionslack ist ein weicher Lack mit einem relativ hohen Füllstoffanteil. Dieser kann vorteilhaft vor dem Farb- und/oder Decklack aufgebracht werden, um das Metall und die integrierte Vorbehandlungsschicht vor mechanischer Beschädigung, beispielsweise durch Steinschlag oder Kratzen zu schützen.

Das Aufbringen weiterer Lackschichten kann in der beschriebenen Bandbeschichtungsanlage vorgenommen werden. Es werden dann mehrere Applikations- sowie optional Härtungsstationen hintereinander geschaltet. Alternativ kann aber nach der Applikation der Härtung der integrierten Vorbehandlungsschicht das beschichtete Band wieder aufgerollt und weitere Schichten erst zu einem späteren Zeitpunkt in anderen Anlagen aufgebracht werden. Die Weiterverarbeitung der beschichteten Metallbänder kann vor Ort erfolgen oder sie können zur Weiterverarbeitung an einen anderen Ort transportiert werden. Hierzu ist es sinnvoll, diese beispielsweise mit abziehbaren Schutzfolien zu versehen.

Mit einer integrierten Vorbehandlungsschicht versehene Bänder können aber auch zunächst - beispielsweise mittels Trennen, Umformen und Fügen - zu metallischen Formteilen verarbeitet werden. Das Fügen kann auch mittels Schweißen erfolgen. Der erhaltene Formkörper kann danach wie vorstehend beschrieben mit weiteren Lackschichten versehen werden.

Gegenstand der Erfindung sind daher auch Formkörper mit einer metallischen Oberfläche, welche mit der vernetzbaren Zubereitung zum Aufbringen von Vorbehandlungsschichten, vorzugsweise mit einer Dicke von 1 bis 25 µm beschichtet sind sowie Formkörper, die darüber hinaus noch weitere Lackschichten aufweisen. Der Begriff "Formkörper" soll hier sowohl beschichtete Bleche, Coils, Folien oder Bänder wie auch die daraus erhaltenen metallischen Bauteile umfassen. Bei derartigen Bauteilen handelt es sich insbesondere um solche, die zur Verkleidung, Verblendung oder Auskleidung verwendet werden können. Beispiele umfassen Automobilkarosserien oder Teile davon, LKW-Aufbauten, Rahmen für Zweiräder wie Motorräder oder Fahrräder oder Teile für derartige Fahrzeuge, wie beispielsweise Schutzbleche oder Verkleidungen, Verkleidungen für Haushaltsgeräte wie beispielsweise Waschmaschinen, Geschirrspülmaschinen, Wäschetrockner, Gas- und Elektroherde, Mikrowellengeräte, Tiefkühltruhen oder Kühlschränke, Verkleidungen für technische Geräte oder Einrichtungen wie beispielsweise Maschinen, Schaltschränke, Computergehäuse oder dergleichen, Bauelemente im Architekturbereich wie Wandteile, Fassadenelemente, Deckenelemente, Fenster- oder Türprofile oder Trennwände, Möbel aus metallischen Materialien wie Metallschränke, Metallregale, Teile von Möbeln oder auch Beschläge. Weiterhin kann es sich auch um Hohlkörper zur Lagerung von Flüssigkeiten oder anderen Stoffen handeln, wie beispielsweise Dosen, Büchsen oder auch Tanks.

Weiterhin umfasst der Begriff Formkörper Metallkonstruktionen beziehungsweise Metallbauteile von Bauwerke, die üblicherweise Baustahl, wie Stahlträger, Stahlrohre, Stahlbleche, Nieten und Schrauben. Beispiele hierfür sind Brücken, Strommasten, Tanks, Container, chemische Anlagen, Gebäude, Dächer, Rohre, Kupplungen, Flansche, Schiffe, Kräne, Pfähle oder Spundwände.

Weiterhin betrifft die Erfindung die Verwendung einer vernetzbaren Zubereitung, umfassend Phosphinsäurederivate der vorstehend definierten allgemeinen Formel HO₂P(R¹)(R²) und/oder Salzen davon zur Beschichtung metallischer Oberflächen eines Formteils.

Die Verwendung von Phosphinsäurederivaten der allgemeinen Formel HO₂P(R¹)(R²) und/oder Salzen davon bezieht sich gemäß einer Ausführungsform der Erfindung auf deren Verwendung für thermisch oder photochemisch vernetzbare integrierte Vorbehandlungsschichten.

Gemäß einer weiteren Ausführungsform bezieht sich die Verwendung der Phosphinsäurederivate auf deren Verwendung für unter atmosphärischen Bedingungen aushärtbare Korrosionsschutzzusammensetzungen.

### Verzeichnis der Abbildungen

- Abbildung 1:: Schnitt durch ein beschichtetes Metallband bei zweistufiger Vorbehandlung gemäß dem Stand der Technik
- Abbildung 2: Schnitt durch ein beschichtetes Metallband mit erfindungsgemäßer integrierter Vorbehandlungsschicht.

Die folgenden Beispiele sollen die Erfindung näher erläutern:

### Beispiele und Vergleichsbeispiele

Beispiele und Vergleichsbeispiele für thermisch vernetzbare Beschichtungen

### Basisrezeptur für thermisch vernetzbare Beschichtungen

Für die Formulierung zur Herstellung einer integrierten Vorbehandlungsschicht wurden die folgenden Komponenten eingesetzt:

| Komponente | Beschreibung | Menge [Gewichtsteile] |
|---|---|---|
| Bindemittel mit vernetzten Gruppen | Epoxybindemittel (Molekulargewicht 1000 g/mol, Viskosität 13 dPas/s und 50% Festkörpergehalt) | 26,9 |
| Füllstoffe | hydrophile pyrogene Kieselsäure (Aerosil^{®} 200V, Fa. Degussa) | 0,16 |
| | Talkum Finntalg M5 | 2,9 |
| | Weißpigment Titan Rutil 2310 | 10,8 |
| | mit Calciumionen modifiziertes Siliciumdioxid (Shieldex^{®}, Grace Division) | 3,0 |
| | Zinkphosphat (Sicor^{®} ZP-BS-M, Waardals Kjemiske Fabriken) | 4,1 |
| | Schwarzpigment (Sicomix^{®} schwarz, BASF AG) | 1,0 |
| Lösemittel | Butylglykol | 5,0 |

Die Komponenten wurden in einem geeigneten Rührgefäß in der angegebenen Reihenfolge vermischt und mit einem Dissolver während 10 Minuten vordispergiert. Die resultierende Mischung wurde in eine Perlmühle mit Kühlmantel überführt und mit 1,8 bis 2,2 mm SAZ-Glasperlen vermischt. Das Mahlgut wurde während 1 h 30 Minuten gemahlen. Anschließend wurde das Mahlgut von den Glasperlen abgetrennt.

Dem Mahlgut wurde unter Rühren in der angegebenen Reihenfolge 5,9 Gewichtsanteile eines handelsüblichen selbstvernetzenden Urethanharzes (Desmodur^{®} VP LS 2253, der Fa. Bayer AG) und 0,4 Gewichtsteile eines handelsüblichen zinnfreien Vernetzungskatalysators (Borchi^{®} VP 0245 der Fa. Borchers GmbH) zugegeben.

Der Basisrezeptur wurden zusätzlich jeweils 3 Gewichtsanteile eines der erfindungsgemäß zu verwendenden Phosphinsäuren beziehungsweise deren Salze eingesetzt. Die jeweils verwendeten Phosphinsäuren sind in Tabelle 1 zusammengestellt. Zu Vergleichszwecken wurde eine Basisrezeptur ohne Zusatz belassen.

### Beispiele 1 bis 19 und Vergleichsbeispiele

**Tabelle 1: Für die Versuche eingesetzte Korrosionsinhibioren**

| | Inhibitor |
|---|---|
| Beispiel 1 | 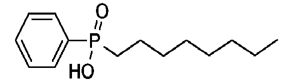 |
| Beispiel 2 | 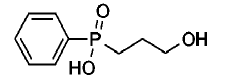 |
| Beispiel 3 | 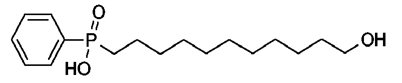 |
| Beispiel 4 | 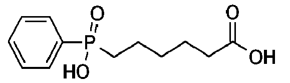 |
| Beispiel 5 | 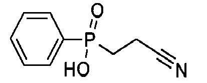 |
| Beispiel 6 | 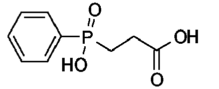 |
| Beispiel 7 | 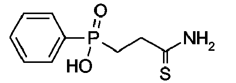 |
| Beispiel 8 | 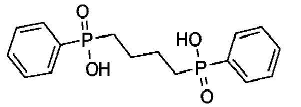 |
| Beispiel 9 | 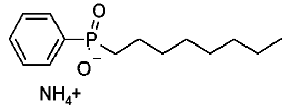 |
| Beispiel 10 | 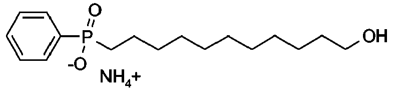 |
| Beispiel 11 | 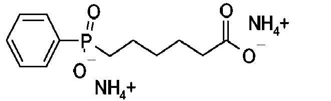 |
| Beispiel 12 | 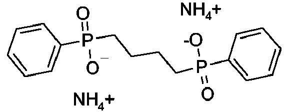 |
| Beispiel 13 | 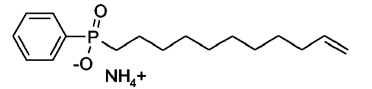 |
| Beispiel 14 | 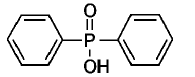 |
| Beispiel 15 | 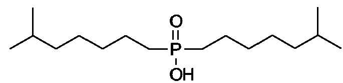 |
| Beispiel 16 | 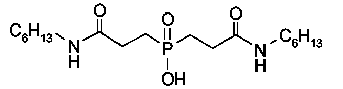 |
| Beispiel 17 | 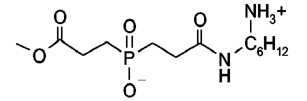 |
| Beispiel 18 | 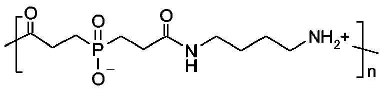 |
| Beispiel 19 | 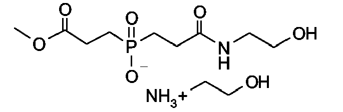 |
| Vergleichsbeispiel 1 | ohne |

### Beschichtung von Stahl und Aluminiumblechen

Für die Beschichtungsversuche wurden verzinkte Stahlplatten der Sorte Z (OEHDG 2, Firma Chemetall) und Aluminiumplatten AlMgSi (AA6016, Firme Chemetall) eingesetzt. Diese wurden vorher nach bekannten Methoden gereinigt.

Die beschriebenen Coil-Coating-Lacke wurden mit Hilfe von Stabrakeln in einer solchen Nassschichtdicke appliziert, dass nach der Härtung in einem Durchlauftrockner bei einer Umlufttemperatur von 185°C und einer Objekttemperatur von 171 °C Beschichtungen in einer Trockenschichtdicke von 6 µm resultierten.

Zu Vergleichszwecken wurden auch Beschichtungen ohne den Zusatz der Inhibitoren hergestellt.

Um die korrosionsinhibierende Wirkung der erfindungsgemäßen Beschichtungen zu testen, wurden die verzinkten Stahlplatten 10 Wochen dem VDA-Klimawechseltest (VDA Prüfblatt 621-418, Februar 82) unterzogen.

Bei diesem Test werden die Proben zunächst für einen Tag einem Salzsprühtest ausgesetzt (5 % NaCl-Lösung, 35°C) und anschließend 3 x wechselweise Feuchtklima (40°C, 100 % relative Feuchte) und Trockenklima (22°C, 60 % relative Feuchte) ausgesetzt. Ein Zyklus wird durch eine 2-tägige Trockenklimaphase beendet. Es werden insgesamt 10 solcher Belastungszyklen nacheinander durchgeführt.

Nach der Beendigung der Korrosionsbelastung wurden die Stahlplatten visuell durch Vergleich mit vorgegebenen Standards ausgewertet. Es wurde sowohl die Bildung von Korrosionsprodukten auf der unbeschädigten Lackfläche als auch die Unterwanderungsneigung an Kante und Ritz beurteilt.

Die Bewertung der Proben erfolgte aufgrund eines Vergleichs mit der Vergleichsprobe ohne Zusatz der Korrosionsinhibitoren.

Die korrosionsinhibierende Wirkung der Stahlplatten wurde weiterhin durch einen Salzsprühtest nach DIN 50021 vorgenommen.

An Aluminiumplatten wurde der essigsaure Salzsprühtest ESS (DIN 50021, Jun 88) durchgeführt. Dabei wurden die kreisförmigen Endhaftungen auf der gesamten Lackfläche bewertet.

Für alle Tests wurden die Lackschichten eingeritzt; im Falle der Stahlplatten durch die Zinkschicht hindurch bis auf die Stahlschicht.

Zur Bewertung der Proben wurden die folgenden Noten vergeben:
F = Flächenkorrosion
   0 Korrosionsschäden wie bei der Nullprobe
   + weniger Korrosionsschäden als bei der Nullprobe
   ++ wesentlich weniger Korrosionsschäden als bei der Nullprobe
   - mehr Korrosionsschäden als bei der Nullprobe
   U = maximale Unterwanderung (in mm)

Die Ergebnisse des Tests sind in den Tabellen 2 und 4 schematisch dargestellt.

**Tabelle 2: Zusammenstellung der Ergebnisse der Korrosionsschutztests**

| | Inhibitor | KWT | | SN | | ESS |
|---|---|---|---|---|---|---|
| | | F | U | F | U | |
| Beispiel 1 | 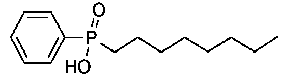 | ++ | 4,5 | ++ | 0,0 | - |
| Beispiel 2 | 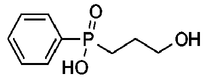 | | | | | |
| Beispiel 3 | 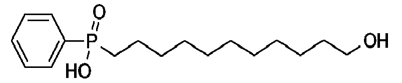 | + | 3,5 | ++ | 0,0 | - |
| Beispiel 4 | 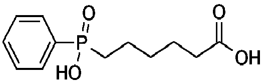 | + | 3,0 | - | 0,0 | - |
| Beispiel 5 | 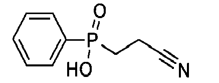 | | 2,5 | + | 0,5 | - |
| Beispiel 6 | 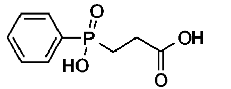 | + | 0,0 | ++ | 0,0 | + |
| Beispiel 7 | 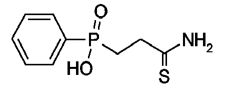 | + | 2,0 | ++ | 0,0 | + |
| Beispiel 8 | 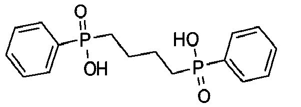 | ++ | 1,5 | - | n.d | + |
| Beispiel 9 | 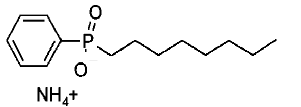 | 0 | 3,5 | 0 | 0,0 | - |
| Beispiel 10 | 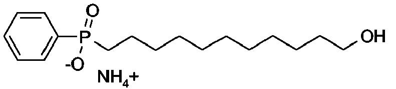 | + | 5,0 | + | 0,0 | - |
| Beispiel 11 | 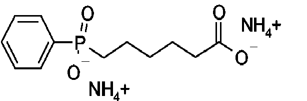 | - | 4,0 | + | 0,0 | + |
| Beispiel 12 | 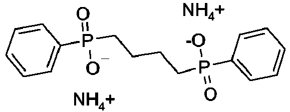 | 0 | 5,0 | + | 0,0 | ++ |
| Beispiel 13 | 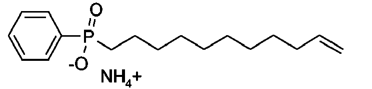 | 0 | 3,0 | ++ | 0,0 | - |
| Beispiel 14 | 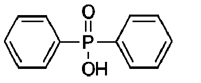 | + | 2,5 | + | 5,0 | - |
| Vergleichsbeispiel 15 | 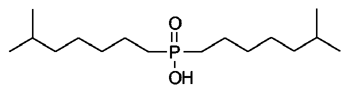 | ++ | 5,0 | n.d. | | + |
| Beispiel 16 | 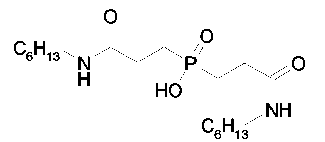 | + | 5,5 | ++ | 0,0 | + |
| Beispiel 17 | 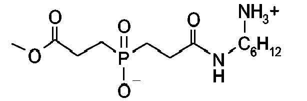 | 0 | 4,0 | - | 0,0 | + |
| Beispiel 18 | 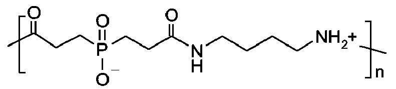 | - | 10 | - | 0,5 | + |
| Beispiel 19 | 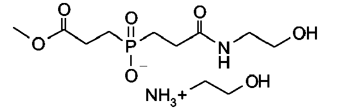 | - | 12 | - | 5,0 | - |
| Vergleichsbeispiel 1 | - | 0 | 5,5 | 0 | 3,0 | 0 |

n.d. = nicht durchgeführt

Aus den dargestellten Ergebnissen geht hervor, dass bevorzugt Molekülen mit der R²-Gruppe -P(=O)(-OH)-CH₂-CH₂ C(=O,S)(-NHR, -NH₂, -OH) eine besondere gute Wirkung zum Schutz von Aluminium und Stahl gegenüber Korrosion zeigen, wenn sie hydrophob genug sind und beispielsweise eine Phenylgruppe wie in Beispiel 6 und 7 oder eine aliphatische C₆H₁₂-Gruppe, wie in Beispiel 16 als R¹ umfassen. Hydrophobe Phosphinsäuren zeigen allgemein ebenfalls eine gute Korrosionsschutzwirkung, wie aus den Beispielen 1, 3, 8 und 15 hervorgeht.

Die Beispiele und Vergleichsbeispiele zeigen, dass mit Phosphinsäuren ausgezeichnete Ergebnisse erzielt werden. Sie zeigen weiterhin, dass durchaus nicht jeder Inhibitor für dünne Korrosionsschutzschichten gleichermaßen gut geeignet ist.

### Beispiele und Vergleichsbeispiele für photochemisch vernetzbare Beschichtungen

### Basisrezeptur für UV-vernetzbare Beschichtungen

Für die Formulierung zur Herstellung einer integrierten Vorbehandlungsschicht wurden die folgenden Komponenten eingesetzt:

| Komponente | Beschreibung | Menge [Gewichtsanteile] |
|---|---|---|
| Bindemittel | Aliphatisches Urethanacrylat, 70 %ig in monofunktionellem Acrylestermonomer | 45 |
| | monofunktionelles Acrylmonoethermonomer | 20,5 |
| | saurer Haftvermittler auf Basis eines sauren Phosphorsäureeters/Acrylesters/Methacrylesters | 6,5 |
| Füllstoffe | amorphe Kieselsäure | 20 |
| | Irgacure 184 | 7,5 |
| | Zinknitroisophthalat | 0,5 |

Die Komponenten wurden in einem geeigneten Rührgefäß in der angegebenen Reihenfolge vermischt und mit einem Dissolver während 10 Minuten dispergiert. Die resultierende Mischung wurde mit 1,8 bis 2,2 mm -SAZ-Glasperlen vermischt. Das Mahlgut wurde während 2 Stunden im Skandex dispergiert. Anschließend wurde das Mahlgut von den Glasperlen abgetrennt.

### Beispiele und Vergleichsbeispiele

Der Basisrezeptur wurden zusätzlich 3 Gewichtsanteile der erfindungsgemäß zu verwendenden Phosphinsäure hinzugegeben. Zu Vergleichszwecken wurde eine Basisrezeptur ohne Zusatz belassen.

### Beispiele 20 bis 28 und Vergleichsbeispiel 2

Der Basisrezeptur wurden jeweils zusätzlich jeweils 3 Gewichtsteile eines der erfindungsgemäß zu verwendenden Phosphinsäuren bzw. deren Salze eingesetzt. Die jeweils verwendeten Phosphinsäuren sind in Tabelle 1 zusammengestellt.

Zu Vergleichszwecken wurde eine Basisrezeptur ohne Zusatz belassen.

**Tabelle 3: Für die Versuche eingesetzte Korrosionsinhibitoren**

| | Inhibitor |
|---|---|
| Beispiel 20 | 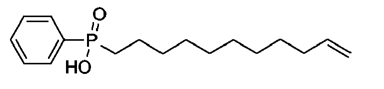 |
| Beispiel 21 | 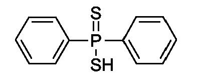 |
| Beispiel 22 | 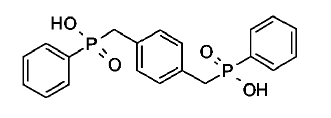 |
| Beispiel 23 | 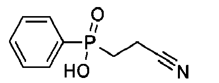 |
| Beispiel 24 | 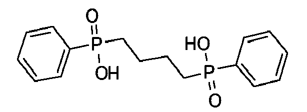 |
| Beispiel 25 | 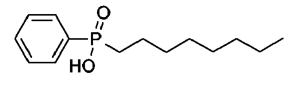 |
| Beispiel 26 | 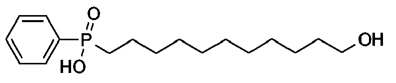 |
| Beispiel 27 | 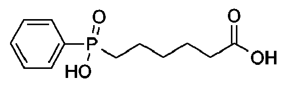 |
| Beispiel 28 | 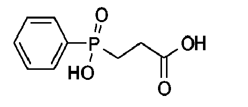 |
| Vergleichsbeispiel 2 | |

### Aufbringen der erfindungsgemäßen integrierten Vorbehandlungsschichten

Die Zusammensetzungen wurden mit Hilfe von Stabrakeln auf Stahlplatten der Sorte Z (OEHDG 2, Fa. Chemetall) in einer Schichtdicke von 7 µm appliziert. Die Härtung erfolgte mittels einer UV-Anlage bei einer Bandgeschwindigkeit von 2 m/min mit zwei Quecksilbermitteldruckstrahlern mit einer Leistungsaufnahme von jeweils 120 Watt/cm.

### Test der Stahlbleche

An den Stahlblechen wurde ein Salzsprühtest durchgeführt. Nach Beendigung der Korrosionsbelastung wurden die Bleche visuell ausgewertet. Dabei wurde der Rostgrad entsprechend DIN 53210 bewertet.

Die Ergebnisse sind in Tabelle 4 zusammengestellt:

**Tabelle 4: Zusammenstellung der Ergebnisse der Korrosionsschutztests in UV- Lacken**

| Formulierung gemäß | Bewertung nach 200 h Salzsprühtest | Bewertung nach 500 h Salzsprühtest |
|---|---|---|
| Beispiel 20 | R2, m5/g1 | R3, m5/g2 |
| Beispiel 21 | R2-3, m3/g1 | R3, m5/g2 |
| Beispiel 22 | R1, m2/g1 | R2-3, m4/g1 |
| Beispiel 23 | R3, m3/g2 | R3-4, m4/ g2 |
| Beispiel 24 | R1, m5/g1 | R2, m5/ g2 |
| Beispiel 25 | R2, m1/g1 | R2-3, m3/ g1 |
| Beispiel 26 | R1, m1/g1 | R2, m3/ g1 |
| Beispiel 27 | R2, m5/g2 | R4, m5/ g2 |
| Beispiel 28 | R3, m5/g2 | R4, m5/ g3 |
| Vergleichsbeispiel 2 | R3, m5/g2 | R4, m5/ g3 |

Die vorstehend aufgeführten Beispiele und Vergleichsbeispiele zeigen, dass in UVvernetzbaren integrierten Vorbehandlungsschichten mit hydrophoben Phosphinsäurederivaten ausgezeichnete korrosionsinhibierende Ergebnisse erzielt werden. Bei UVvernetzbaren Zusammensetzungen sind insbesondere die hydrophoben Phosphinsäurederivate der Beispiele 22, 24, 25 und 26 besonders vorteilhaft.

### Beispiele und Vergleichsbeispiele für atmosphärisch vernetzbare Beschichtungen

Herstellung des erfindungsgemäßen Korrosionsschutz-Lacks (L-1, L-2 und L-3) sowie des Vergleichslacks LV-1

Zur anwendungstechnischen Prüfung wurde eine Korrosionsschutzformulierung auf Basis einer handelsüblichen wässrigen Styrol-Acrylat-Dispersion für Anstrichstoffe (Acronal^{®} Optive 410, Fa. BASF Corp.) verwendet. Die verwendete Dispersion weist die folgenden Eigenschaften auf:

| | |
|---|---|
| Feststoffgehalt | 49-51% |
| pH | 7,5-8,5 |
| Brookfield-Viskosität | 500-1000 cps |
| Dichte | 1,06 g/cm³ |
| MFFT (Minimum Film Forming Temperature (nach ASTM D 2354)) | ca. 12°C |
| Partikelgröße | ca. 110 nm |

Gemäß Richtformulierung wurde ausgehend von 560 g der wässrigen Dispersion Acronal Optive 410 eine Basis-Grundierung LV-1 hergestellt. Im Anschluss daran wurde in eine Teilmenge davon 3 Gew.% (bezogen auf das Bindemittel-Polymer) eines Additivs als Lösung in einem Lösungsmittel (näheres siehe Tabellen 5 und 6) bei Raumtemperatur unter Rühren eingearbeitet, man erhielt dadurch Grundierung L-1 bis L-3. Alle Korrosionsschutz-Grundierungen (L-1, L-2, L-3 und LV-1 wurden nach Applikation auf Tiefziehbleche im Salzsprühtest (Prüfdauer 240 h, Abmusterung nach ISO 7253) vergleichend geprüft. Die Ergebnisse finden sich in der Tabelle 5.

### Richtformulierung für Korrosionsschutz-Grundierungen

Unter Verwendung der erhaltenen wässrigen Dispersionen aus Styrol-Acrylat-Copolymer mit und ohne Zusatz von Phosphinsäurederivaten wurden Zubereitungen gemäß folgender Vorschrift hergestellt:

393,4 g der jeweiligen wässrigen Polymerdispersion werden mit 2,2 g eines handelsüblichen Entschäumers für Lacke (Mischung von Polysiloxanen und hydrophoben Feststoffen in Polyglykol; BYK^{®} 022, Fa. Byk) versetzt, anschließend wird mittels eines Dispermaten eine Mischung bestehend aus 0,6 g eines anionischen Dispergiermittels (saurer Phosphorsäureester eines Fettalkoholalkoxylates; Lutensit^{®} A-EP, Fa. BASF AG), 11,0 g konz. Ammoniak und 58,6 g Wasser zugegeben. Unter Rühren wird weiterhin eine Mischung aus 7,2 g Phenoxypropanol (Filmbildehilfsmittel) und 7,2 g Benzin 180-210°C (Filmbildehilfsmittel) eingearbeitet. Anschließend werden 85,0 g eines Hämatit-Pigmentes (Bayferrox^{®} 130 M, Fa. Lanxess), 82,1 g eines Korrosionsschutzpigmentes auf Basis Zinkphosphat (Heucophos^{®} ZPZ, modifiziertes Zinkphosphat, Fa. Heubach), 36,0 g Magnesiumsilikat (Füllstoff; Talkum 20 M 2, Fa. Luzenac) sowie 127,8 g eines Füllstoffes auf Basis Bariumsulfat und Zinksulfid (30 Gew. % ZnS) (Litopone^{®} L) zugegeben. Die gesamte Mischung wird für mindestens 30 Minuten mit Glasperlen (ø 3mm) dispergiert. Daraufhin werden unter weiterem Rühren weitere 166,4 g Polymerdispersion, 1,9 g BYK^{®} 022 sowie 3,7 g einer 1:1-Mischung aus Wasser und einem handelsüblichen Korrosionsinhibitor (Korrosionsinhibitor L 1, Fa. Erbslöh) zugegeben und die Glasperlen abgesiebt. Zum Abschluss wird der Ansatz mit einer Mischung aus 3,7 g einer 25 % igen Lösung eines handelsüblichen Verdickungsmittels auf Urethan-Basis (Collacral PU 85, Fa. BASF AG) und 13,2 g Butylglykol (Lösungsmittel) versetzt sowie gegebenenfalls der pH-Wert mit konz. Ammoniak auf ca. 9,5 nachgestellt. Man erhält 1000 g einer Korrosionsschutz-Grundierung mit 61% Feststoffgehalt und einer Pigment/Volumen-Konzentration (PVK) von 23%.

### Applikation der Formulierungen auf Stahlbleche, Vorbereitung für den Salzsprühtest

Die zu prüfenden Grundierungen wurden mit vollentsalztem Wasser auf die gewünschte Viskosität (300 bis 1000 mPas (ICI Rotothinner Kugel)) verdünnt und auf ein gereinigtes Tiefziehblech (200 x 80 x 0,9 mm) mit einem Kastenrakel aufgezogen; die Spaltgröße wird dabei so gewählt, dass sich eine Trockenschichtdicke von 60-100 µm ergibt.

Nach sechstägiger Trocknung bei Raumtemperatur sowie einer eintägigen Temperung bei 50°C wurden die Rückseite des Prüfblechs zum Schutz vor Korrosion mit einem lösemittel-basierten Lack beschichtet sowie die Kanten mit Tesa-Film abgeklebt.

Abschließend wurde das Prüfblech auf der mit der zu testenden Grundierung beschichteten Seite mit einem Ritzstachel bis auf das Substrat geritzt.

### Beispiele und Vergleichsbeispiel

| | Inhibitor |
|---|---|
| Beispiel 29 | 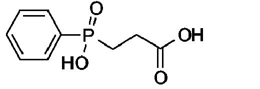 |

Mit den Testblechen wurde ein Salzsprühtest gemäß DIN EN ISO 7253 (Prüfdauer 240 h) durchgeführt.

Zur Bewertung der Proben wurden die folgenden Noten vergeben:
F = Flächenkorrosion
   0 Korrosionsschäden wie bei der Nullprobe
   + weniger Korrosionsschäden als bei der Nullprobe
   ++ wesentlich weniger Korrosionsschäden als bei der Nullprobe
   - mehr Korrosionsschäden als bei der Nullprobe

**Tabelle 5: Zusammensetzung & Kennwerte der Korrosionsschutz-Lacke L-1 (a und b) und LV-1 sowie die damit erzielten Resultate im Salzsprühtest**

| Grundierung | L-1a | L-1 b | LV-1 |
|---|---|---|---|
| Additiv (3% f/f) | Beispiel 1 (20%ig in 15%iger NH3-Lösung) | Beispiel 1 (20%ig in 15%iger NH3-Lösung) | ohne |
| pH-Wert | 8,8 | 8,8 | 8,8 |
| Schichtdicke [µm] | 76-96 µm | 73-85 µm | 72-85 µm |
| Flächenkorrosion | 0 | 0 | 0 |
| Korrosion am Ritz | ++ | ++ | 0 |

Die Daten in der Tabelle 5 zeigen, dass die Korrosion durch das erfindungsgemäß verwendete Phosphinsäurederivat deutlich gehemmt wird. Das erfindungsgemäß verwendete Phosphinsäurederivat ist daher ganz besonders vorteilhaft für atmosphärisch vernetzende Zubereitungen.

## Patentansprüche

1. Formkörper mit metallischer Oberfläche und einer darauf aufgebrachten Vorbehandlungsschicht, erhältlich durch ein Verfahren umfassend die folgenden Schritte:
(1) Bereitstellen eines Substrates mit metallischer Oberfläche,
(2) Aufbringen einer vernetzbaren Zubereitung auf die metallische Oberfläche des Substrates, wobei die Zubereitung bezogen auf die Summe aller Komponenten mit Ausnahme des Lösemittels umfasst:
(A) 20 bis 70 Gew.-% mindestens eines thermisch und/oder photochemisch und/oder atmosphärisch vernetzbaren Bindemittelsystems,
(B) 20 bis 70 Gew.-% mindestens einer Komponente, ausgewählt aus der Gruppe von anorganischen Füllstoffen, Pigmenten und Farbstoffen,
(C) 0,25 bis 40 Gew.-% mindestens eines Phosphinsäurederivates der allgemeinen Formel HO₂P(R¹)(R²), in der R¹ und R² gleich oder verschieden sind, und in dem R¹ eine substituierte oder nicht substituierte Phenylgruppe (-C₆H₅) oder eine substituierte oder nicht substituierte gesättigte oder ungesättigte aliphatische Gruppe mit 1 bis 30 C-Atomen ist, und R² eine substituierte oder nicht substituierte, gesättigte oder ungesättigte aliphatische Gruppe mit 1 bis 30 C-Atomen oder eine substituierte oder nicht substituierte aromatische Gruppe oder eine substituierte oder nicht substituierte araliphatische Gruppe ist, wobei sämtliche der genannten Gruppen gegebenenfalls ein oder mehrere Heteroatome aus der Gruppe umfassend Stickstoff, Sauerstoff, Schwefel, Phosphor in ihrer Kette umfassen und, falls ein Substituent vorhanden ist, dieser ausgewählt ist aus der Gruppe -OH; -OR³; -SR⁴; -NR⁵₂; -NH(CO)R⁶, -(C=O)OR⁷; -(C=O)R⁸; -(C=NR⁹)R¹⁰; -(C=S)NR¹¹₂; -CN; -(C=S)R¹²; -(C=O)SR¹³; -(C=N)R¹⁴; -(C=O)NR¹⁵R¹⁶, und einer weiteren Phosphinsäuregruppe mit dem Strukturelement -P(O)(OH)-R²³, wobei R³, R⁴, R⁵, R⁶, R⁷, R⁸, R⁹, R¹⁰, R¹¹, R¹², R¹³, R¹⁴, R¹⁵ und R¹⁶ unabhängig voneinander gleich oder verschieden sind und H, substituiertes oder nicht substituiertes C₁- bis C₆-Alkyl, oder substituiertes oder nicht substituiertes Aryl darstellen, wobei R²³ unabhängig die gleiche Bedeutung wie R¹ oder R² hat, und/oder ein Salz davon,
(D) optional ein oder mehrere Lösemittel, sowie
(3) thermisches und/oder photochemisches und/oder atmosphärisches Vernetzen der vernetzbaren Zubereitung.

2. Formkörper nach Anspruch 1, **dadurch gekennzeichnet, dass** es sich bei dem Formkörper um ein Coil handelt.

3. Formkörper nach Anspruch 1, **dadurch gekennzeichnet, dass** es sich bei dem Formkörper um eine Autokarosserie oder ein Karosserieteil handelt.

4. Formkörper nach Anspruch 1, **dadurch gekennzeichnet, dass** es sich bei dem Formkörper um ein Bauelement zur Verkleidung handelt.

5. Formkörper nach einem der Ansprüche 1 bis 4, **dadurch gekennzeichnet, dass** es sich bei der Vorbehandlungsschicht um eine integrierte Vorbehandlungsschicht handelt.

6. Formkörper nach einem der Ansprüche 1 bis 5, **dadurch gekennzeichnet, dass** die Vernetzung thermisch und/oder photochemisch geschieht.

7. Formkörper nach einem der Ansprüche 1 bis 6, **dadurch gekennzeichnet, dass** in der Formel HO₂P(R¹)(R²) R¹ eine nicht substituierte Phenylgruppe (-C₆H₅) und R² eine substituierte oder nicht substituierte, gesättigte oder ungesättigte aliphatische Gruppe mit 2 bis 16 C-Atomen ist, die gegebenenfalls ein oder mehrere Heteroatome aus der Gruppe umfassend Stickstoff, Sauerstoff, Schwefel, Phosphor in ihrer Kette umfasst und, falls ein Substituent an R² vorhanden ist, dieser ausgewählt ist aus der Gruppe -OH; -(C=O)OR⁷ und -(C=S)NR¹¹₂, wobei R⁷ und R¹¹ unabhängig voneinander gleich oder verschieden sind und H, substituiertes oder nicht substituiertes C₁- bis C₆-Alkyl, oder substituiertes oder nicht substituiertes Aryl darstellen.

8. Formkörper nach einem der Ansprüche 1 bis 7, **dadurch gekennzeichnet, dass** in der Formel HO₂P(R¹)(R²) R¹ eine Phenylgruppe und R² eine substituierte oder nicht substituierte, gesättigte oder ungesättigte aliphatische Gruppe mit 1 bis 8 C-Atomen ist und, falls ein Substituent vorhanden ist, dieser ausgewählt ist aus der Gruppe -OH; -(C=O)OR⁷ und -(C=S)NR¹¹₂ , wobei R⁷ und R¹¹ unabhängig voneinander gleich oder verschieden sind und H, substituiertes oder nicht substituiertes C₁- bis C₆-Alkyl, oder substituiertes oder nicht substituiertes Aryl darstellen.

9. Formkörper nach einem der Ansprüche 1 bis 8, **dadurch gekennzeichnet, dass** in der Formel HO₂P(R¹)(R²) R¹ eine Phenylgruppe und R² eine substituierte oder nicht substituierte, gesättigte aliphatische Gruppe oder eine substituierte oder nicht substituierte aromatische Gruppe oder eine substituierte oder nicht substituierte araliphatische Gruppe mit 2 bis 20 C-Atomen ist und, falls ein Substituent vorhanden ist dieser ausgewählt ist aus der Gruppe -OH; -CN; und einer weiteren Phosphinsäuregruppe mit dem Strukturelement -P(O)(O⁻)-R²³, wobei R²³ die gleiche Bedeutung wie R¹ oder R² hat.

10. Formkörper nach einem der Ansprüche 1 bis 9, **dadurch gekennzeichnet, dass** die Formel HO₂P(R¹)(R²) eine weitere Phosphinsäuregruppe mit dem Strukturelement -P(O)(OH)-R²³ umfasst, wobei R²³ die gleiche Bedeutung wie R¹ oder R² hat, das über eine substituierte oder nicht substituierte C₁- bis C₁₅-Alkylengruppe; eine substituierte oder nicht substituierte C₂- bis C₁₅-Alkenylengruppe oder eine substituierte oder nicht substituierte C₂- bis C₁₅- Alkinylengruppe oder eine substituierte oder nicht substituierte araliphatische Gruppe an die erste Phosphinsäuregruppe gebunden ist und gegebenenfalls in der Kette und/oder an anderer Stelle zumindest einen Substituenten ausgewählt aus der Gruppe -OH, -NO₂, -CN, -(C=O)OR²¹, -NR²²₂ umfasst, wobei R²¹ und R²² gleich oder verschieden und unabhängig voneinander H, C₁- bis C₆-Alkyl oder Aryl sind.

11. Formkörper nach einem der Ansprüche 1 bis 10, **dadurch gekennzeichnet, dass** die Formel HO₂P(R¹)(R²) eine weitere Phosphinsäuregruppe mit dem Strukturelement -P(O)(OH)-R²³ umfasst, wobei R²³ die gleiche Bedeutung wie R¹ oder R² hat, das über eine nicht substituierte C₁- bis C₄-Alkylgruppe and die erste Phosphinsäuregruppe gebunden ist, die gegebenenfalls in der Kette und/oder an anderer Stelle eine oder mehrere substituierte oder nicht substituierte aromatische Gruppen umfasst, wobei R²³ eine nicht substituierte Phenylgruppe ist.

12. Verfahren zum Aufbringen von Vorbehandlungsschichten auf ein Substrat mit metallischer Oberfläche, umfassend die Schritte wie in einem der Ansprüche 1 bis 11 dargelegt.

13. Verwendung einer Zubereitung, wie in einem der Ansprüche 1 bis 11 dargelegt, zur Beschichtung der metallischen Oberfläche eines Formteils.

14. Vernetzbare Zubereitung zum Aufbringen integrierter Vorbehandlungsschichten auf metallische Oberflächen eines Substrates umfassend mindestens die folgenden Komponenten; bezogen auf die Summe aller Komponenten mit Ausnahme des Lösemittels:
(A) 20 bis 70 Gew.-% mindestens eines thermisch und/oder photochemisch und/oder atmosphärisch vernetzbaren Bindemittelsystems,
(B) 20 bis 70 Gew.-% mindestens einer Komponente ausgewählt aus der Gruppe von anorganischen Füllstoffen, Pigmenten und Farbstoffen,
(C) 0,25 bis 40 Gew.-% mindestens eines Phosphinsäurederivates, wie in einem der Ansprüche 1 bis 8 definiert, sowie
(D) optional ein oder mehrere Lösemittel.
